# EUROPEAN PATENT SPECIFICATION

(11) **EP 4 484 197 B1**
(45) Date of publication and mention of the grant of the patent: **18.03.2026**
(21) Application number: 24180362.6
(22) Date of filing: 06.06.2024
(51) Int. Cl.: B60K 11/02, F16H 57/031, F16H 57/04, H02K 9/19, F16H 57/029, B60K 1/00, B60K 7/00

(54) **SPLIT-TYPE OIL-PASSING POWERTRAIN AND ELECTRIC VEHICLE**
GETEILTER ÖLDURCHGANGSANTRIEBSSTRANG UND ELEKTROFAHRZEUG
GROUPE MOTOPROPULSEUR À PASSAGE D'HUILE DE TYPE DIVISÉ ET VÉHICULE ÉLECTRIQUE

(30) Priority: 30.06.2023 CN 202321718048 U
(43) Date of publication of application: 01.01.2025
(73) Proprietor: Huawei Digital Power Technologies Co., Ltd., Shenzhen, Guangdong 518043 (CN)
(72) Inventor: LI, Chuanyang, Shenzhen, 518043 (CN); XU, Xu, Shenzhen, 518043 (CN); MENG, Chen, Shenzhen, 518043 (CN); XU, Zhihai, Shenzhen, 518043 (CN)
(74) Representative: Isarpatent

(56) References cited:
- WO-A1-2022/270088
- CN-A- 111 649 117
- DE-A1- 102014 111 461
- US-A1- 2019 003 572
- US-B2- 11 137 061

## Description

### TECHNICAL FIELD

This application relates to the field of powertrain technologies, and in particular, to a split-type oil-passing powertrain and an electric vehicle.

### BACKGROUND

An existing electric vehicle usually uses an integrated powertrain as a power source. Currently, a motor and a motor controller are usually integrated into a two-in-one powertrain, or a motor, a motor controller, and a reducer are usually integrated into a three-in-one powertrain, or a motor, a motor controller, a reducer, and another component of an electric vehicle are usually integrated into an all-in-one powertrain. The powertrain generates high heat when working, which affects a service life and stability of the powertrain. To reduce a temperature of the powertrain in a working state, a cooling channel is usually disposed in the powertrain, and cooling oil is injected into the cooling channel. As a result, an internal structure of the powertrain is relatively complex, which increases processing costs and assembly difficulty.
US 11 137 061 B2 discloses a motor unit including a motor including a rotor, a reduction gear including an intermediate gear to rotate about an intermediate axis, a differential including a ring gear arranged to rotate about a differential axis, a housing, oil in a vertically lower region of a housing space, and an oil passage to feed the oil to the motor. The motor unit further includes a gear housing portion wherein a shaft includes a first shaft portion and a second shaft portion, wherein the first shaft portion and the second shaft portion are coupled to each other, wherein the gear housing portion and the shaft including a first shaft portion and a second shaft portion are positioned in a same direction. Therefore US 11 137 061 B2 is considered to disclose a split-type oil-passing powertrain, comprising a motor, a reducer and a reducer end cover, wherein a motor shaft of the motor is fastened to a reducer input shaft of the reducer; the reducer end cover, the reducer input shaft, and the motor shaft are arranged along a first direction, and the first direction is parallel to an axial direction of the reducer input shaft; and the reducer end cover comprises an oil guiding member, which is configured to transfer cooling oil to the reducer input shaft.
DE 10 2014 111 461 A1 discloses an oil collecting device for collecting transmission oil and for introducing it into a transmission shaft, having a base body, the base body having a first section, via which the base body can be introduced in sections into a bore in the transmission shaft, and a second section, which projects out of the transmission shaft when the first section is introduced into the transmission shaft, an oil collecting surface being provided at an end of the second section remote from the first section, which projects out of the transmission shaft when the first section is inserted into the transmission shaft, wherein an oil collecting surface or transmission oil is formed at an end of the second section (18) facing away from the first section, and wherein a further oil collecting surface for transmission oil is formed at an end of the second section facing the first section.

### SUMMARY

This application provides a split-type oil-passing powertrain and an electric vehicle, as defined in the appended set of claims.

According to a first aspect, an embodiment of this application provides a split-type oil-passing powertrain, including a motor, a reducer, and a reducer end cover, where a motor shaft of the motor is fastened to a reducer input shaft of the reducer, the reducer end cover, the reducer input shaft, and the motor shaft are arranged along a first direction, and the first direction is parallel to an axial direction of the reducer input shaft; and the reducer end cover includes a sealing member, an oil guiding member, and a fastening hole that runs through the reducer end cover along the first direction, the sealing member and the oil guiding member are located in the fastening hole, the sealing member, the oil guiding member, and the reducer input shaft are sequentially arranged along the first direction, and the oil guiding member is configured to transfer cooling oil to the reducer input shaft.

In this embodiment of this application, the powertrain is disposed, so that the cooling oil can be guided into the powertrain through the oil guiding member, and a temperature of the powertrain in a steady working state is reduced, thereby improving working efficiency and a service life of the powertrain. The sealing member and the oil guiding member are separately disposed components. This simplifies the structure compared with an integrated structure, and it is more convenient to separately process the sealing member and the oil guiding member, thereby reducing processing difficulty and costs. The sealing member and the oil guiding member are disposed separately, so that an action force and wear on the oil guiding member can be significantly reduced, the service life can be prolonged, and flow guiding effect of the oil guiding member can be ensured.

In an embodiment, the oil guiding member includes a radial oil passage of the oil guiding member and an axial oil passage of the oil guiding member that communicate with each other, an extension direction of the radial oil passage of the oil guiding member is parallel to a radial direction of the reducer input shaft, an extension direction of the axial oil passage of the oil guiding member is parallel to the axial direction of the reducer input shaft, and the axial oil passage of the oil guiding member and the reducer input shaft are spaced apart along the first direction.

In this embodiment of this application, the cooling oil sequentially flows through the radial oil passage of the oil guiding member, the axial oil passage of the oil guiding member, and the reducer input shaft, and then flows to the reducer accommodating cavity. The oil guiding member communicates with the reducer input shaft through the axial oil passage of the oil guiding member, and an extension direction of the axial oil passage of the oil guiding member is parallel to the axial direction of the reducer input shaft, that is, the axial oil passage of the oil guiding member extends along the first direction. This reduces flow resistance of the cooling oil in the oil guiding member and the reducer input shaft, and improves cooling efficiency. In this embodiment of this application, the axial oil passage of the oil guiding member and the reducer input shaft are spaced apart along the first direction, so that the reducer input shaft is isolated from the oil guiding member, thereby facilitating rotation of the reducer input shaft, and reducing friction between the reducer input shaft and the oil guiding member.

In an embodiment, the reducer input shaft includes a reducer shaft cavity, the motor shaft includes a motor shaft cavity, the reducer further includes an oil pipe, the reducer shaft cavity is configured to accommodate the oil pipe, and the oil pipe is configured to enable the oil guiding member and the motor shaft cavity to communicate with each other; along the first direction, the reducer shaft cavity runs through the reducer input shaft, and the motor shaft cavity runs through the motor shaft, the oil pipe, the oil guiding member, and the sealing member are spaced apart along the first direction; and there is a gap between the axial oil passage of the oil guiding member and the oil pipe along the first direction, an inner diameter of the oil pipe is greater than an inner diameter of the axial oil passage of the oil guiding member, and a projection of the axial oil passage of the oil guiding member along the first direction falls within a projection of the oil pipe along the first direction.

In this embodiment of this application, both the reducer shaft cavity and the motor shaft cavity extend along the first direction, the oil pipe is located in the reducer shaft cavity and is located on a side that is of the oil guiding member and that is away from the sealing member along the first direction, and the oil pipe communicates with the reducer accommodating cavity through the reducer shaft cavity. The oil guiding member communicates with the reducer accommodating cavity through the reducer input shaft. Further, the axial oil passage of the oil guiding member communicates with the motor shaft cavity by using the oil pipe. The cooling oil may sequentially cool the reducer shaft cavity and the motor shaft cavity by using the oil guiding member and the oil pipe. This provides a prerequisite for subsequently cooling an internal structure of the motor, and improves cooling efficiency of the cooling oil inside the powertrain. The sealing member, the oil guiding member, and the oil pipe are spaced apart along the first direction, and the sealing member is fastened in the fastening hole, so that the oil guiding member and the oil pipe can be slightly displaced in the first direction. This reduces wear between the sealing member and the oil guiding member and wear between the oil guiding member and the oil pipe, thereby improving the service life. In addition, this prevents the oil guiding member from being damaged because the oil guiding member is squeezed when the sealing member is used for sealing and fastening in the fastening hole.

In this embodiment of this application, the axial oil passage of the oil guiding member and the oil pipe are spaced apart along the first direction, so that when the reducer input shaft rotates at a high speed, the oil guiding member and the oil pipe can implement non-contact oil guiding, thereby avoiding wear between the oil guiding member and the oil pipe, and avoiding heat generated due to the wear, so that the cooling oil can cool and dissipate heat for a heating component inside the powertrain. Therefore, this implementation can not only reduce a failure risk of the oil guiding member and a failure risk of the oil pipe, but also improve utilization of the cooling oil and enhance heat dissipation effect. In addition, in this solution, the inner diameter of the oil pipe is set to be greater than the inner diameter of the axial oil passage of the oil guiding member, and the projection of the oil pipe along the first direction overlaps with the projection of the axial oil passage of the oil guiding member along the first direction, so that in a process in which the cooling oil flows from the axial oil passage of the oil guiding member to the oil pipe, flow resistance is reduced, and a flow rate is increased, thereby improving cooling efficiency of the cooling oil.

In an embodiment, the reducer further includes a sleeve structure, and the sleeve structure is sleeved on the oil pipe; the sleeve structure, the oil guiding member, and the sealing member are arranged along the first direction, and the sleeve structure is fastened to the oil guiding member; and the projection of the axial oil passage of the oil guiding member along the first direction falls within a projection of the sleeve structure along the first direction, and along the radial direction of the reducer input shaft, there is a gap between an inner surface that is of the sleeve structure and that faces the oil pipe and an outer surface that is of the oil pipe and that faces the sleeve structure.

In this embodiment of this application, the sleeve structure is located on a surface that is of the oil guiding member and that faces the oil pipe along the first direction, the sleeve structure is sleeved on an outer side of the oil pipe, and the sleeve structure and the oil pipe are spaced apart along the radial direction of the reducer input shaft, so that wear between the sleeve structure and the oil pipe can be reduced, and a service life of the oil guiding member and a service life of the oil pipe can be prolonged. Two ends of the sleeve structure along the first direction respectively communicate with the axial oil passage of the oil guiding member and the oil pipe. Because a size of the axial oil passage of the oil guiding member in the first direction is relatively small, effect of guiding a flow direction of the cooling oil is limited. In addition, the axial oil passage of the oil guiding member and the oil pipe are spaced apart along the first direction, and the sleeve structure is disposed on a side that is of the axial oil passage of the oil guiding member and that is close to the oil pipe. When the reducer input shaft rotates, leakage of a part of cooling oil from the gap between the axial oil passage of the oil guiding member and the oil pipe can be reduced, and the sleeve structure can guide a flow direction of the leaked cooling oil, so that the cooling oil finally enters the reducer shaft cavity. This increases an amount of the cooling oil entering the reducer shaft cavity, and increases an amount of cooling oil entering the motor from the reducer shaft cavity, thereby comprehensively improving cooling efficiency. In this solution, the sleeve structure is disposed to further guide the flow direction of the cooling oil, thereby improving utilization of the cooling oil.

In an embodiment, the reducer shaft cavity is further configured to accommodate a part of the motor shaft, and there is a gap between an outer circumferential surface of the motor shaft and an inner wall of the reducer shaft cavity along the radial direction of the reducer input shaft; and the motor shaft cavity is configured to accommodate a part of the oil pipe, there is an oil gap between the oil pipe and an inner wall of the motor shaft cavity along a radial direction of the motor, an oil pipe sealing boss is disposed on an outer circumferential surface of a part that is of the oil pipe and that is not located in the motor shaft cavity, the oil pipe sealing boss is in sealed connection with the inner wall of the reducer shaft cavity along the radial direction of the reducer input shaft, and the oil pipe sealing boss and the motor shaft are spaced apart along the first direction.

In this embodiment of this application, one end of the motor shaft is located in the reducer shaft cavity, the motor shaft is fixedly connected to the reducer input shaft, and the motor shaft is configured to output power to the reducer input shaft. In a radial direction of the reducer input shaft, there is a fitting gap between an outer circumferential surface of the motor shaft located in the reducer shaft cavity and an inner wall of the reducer shaft cavity, so as to reduce wear between the motor shaft and the reducer input shaft. There is an oil gap between a part of the oil pipe located in the motor shaft cavity and an inner wall of the motor shaft cavity, and the oil pipe sealing boss and the motor shaft are spaced apart along the first direction, which is equivalent to that there is a fitting gap between the oil pipe sealing boss and an end face of the motor shaft along the first direction. A part of cooling oil in the oil pipe can flow into the reducer accommodating cavity through the fitting gap and the oil gap, so that the cooling oil can cool both the reducer shaft cavity and the reducer accommodating cavity. In addition, it may be understood that the fitting gap is usually set to a relatively small value, and a flow rate of the cooling oil at the fitting gap is far less than a flow rate in the reducer shaft cavity. Setting the fitting gap does not enable a large amount of cooling oil to be diverted, and most of the cooling oil enters the motor shaft cavity mainly through the oil pipe.

In this embodiment of this application, a part of the oil pipe is located in the motor shaft cavity, so that the oil pipe communicates with the motor shaft cavity, and the cooling oil may cool inside of the motor by using the oil pipe and the motor shaft cavity. The oil pipe sealing boss is in sealed connection with the inner wall of the reducer shaft cavity along the radial direction of the reducer input shaft, so as to implement radial positioning of the oil pipe.

In an embodiment, the reducer end cover includes a reducer end cover oil passage, the reducer end cover oil passage is configured to communicate with a heat exchanger, the reducer end cover oil passage communicates with the radial oil passage of the oil guiding member in the oil guiding member, and projections of the reducer end cover oil passage and the radial oil passage of the oil guiding member along the radial direction of the reducer input shaft at least partially overlap.

In this embodiment of this application, two ends of the reducer end cover oil passage are respectively connected to the heat exchanger and the oil guiding member, and the heat exchanger transfers the cooling oil to the reducer end cover oil passage. Because projections of the reducer end cover oil passage and the projection of the radial oil passage of the oil guiding member along the radial direction of the reducer input shaft at least partially overlap, the cooling oil can enter the radial oil passage of the oil guiding member through the reducer end cover oil passage, and the reducer end cover oil passage guides the flow direction of the cooling oil. The oil guiding member communicates with the reducer input shaft, the oil pipe, and the motor shaft. The reducer input shaft and the motor shaft are disposed in a hollow shape. The reducer end cover oil passage further communicates with the motor shaft through the reducer input shaft. The reducer input shaft is configured to communicate with the reducer accommodating cavity, and the motor shaft is configured to communicate with the motor accommodating cavity. One part of the cooling oil output by the heat exchanger enters the motor accommodating cavity through the oil pipe and the motor shaft cavity, and the other part of the cooling oil output by the heat exchanger enters the reducer accommodating cavity through the oil pipe, the motor shaft, and the reducer shaft cavity.

In an embodiment, the reducer further includes a reducer bearing, the reducer end cover includes a reducer bearing chamber, the reducer bearing chamber is recessed along the first direction from the reducer end cover to a direction away from the reducer input shaft, and the reducer bearing is sleeved on the reducer input shaft and located in the reducer bearing chamber; and the reducer end cover further includes a reducer bearing lubricating oil hole, where the reducer bearing lubricating oil hole is configured to enable the reducer end cover oil passage and the reducer bearing chamber to communicate with each other, the reducer end cover oil passage, the reducer bearing lubricating oil hole, and the reducer bearing chamber are arranged along the first direction, and the reducer bearing lubricating oil hole and the radial oil passage of the oil guiding member are spaced apart along the radial direction of the reducer input shaft.

The reducer bearing is configured to bear load from the reducer input shaft to reduce friction and ensure that the reducer runs stably in a high-speed working condition. If the reducer bearing is insufficiently lubricated, the reducer bearing may be ablated or damaged. In this embodiment of this application, the reducer end cover oil passage and the reducer bearing are spaced apart. The reducer bearing lubricating oil hole is provided, along the first direction, on the side wall that is of the reducer end cover oil passage and that is close to the reducer bearing. The reducer end cover oil passage, the reducer bearing lubricating oil hole, and the reducer bearing chamber are arranged along the first direction, so that when the cooling oil flows from the heat exchanger through the reducer end cover oil passage, a part of cooling oil enters the reducer bearing chamber through the reducer bearing lubricating oil hole, to lubricate the reducer bearing. This avoids damage to the reducer bearing, improves the service life, and ensures long-term stable running of the reducer. The reducer bearing lubricating oil hole and the radial oil passage of the oil guiding member are spaced apart along the radial direction of the reducer input shaft, so that the cooling oil that has entered the radial oil passage of the oil guiding member is not affected by the reducer bearing lubricating oil hole.

In an embodiment, projections of the reducer bearing lubricating oil hole and the reducer bearing chamber along the first direction at least partially overlap; along the radial direction of the reducer input shaft, a distance between the reducer bearing lubricating oil hole and an axial line of the reducer input shaft is less than an outer diameter of the reducer bearing chamber; and a length of the reducer bearing lubricating oil hole along the first direction and a length of the lubricating oil hole along the radial direction of the reducer input shaft are both less than a length of the reducer end cover oil passage along the first direction.

In this embodiment of this application, the projection of the reducer bearing lubricating oil hole in the first direction at least partially overlaps with a projection of the reducer bearing chamber in the first direction, so that the cooling oil can enter the reducer bearing chamber through the reducer bearing lubricating oil hole, to lubricate the reducer bearing in the reducer bearing chamber. In the radial direction of the reducer input shaft, the distance between the reducer bearing lubricating oil hole and an axial line of the reducer input shaft is less than the outer diameter of the reducer bearing chamber. This ensures that the cooling oil does not flow into an area other than the reducer bearing chamber after flowing into the reducer bearing lubricating oil hole, thereby ensuring cooling effect of the cooling oil on the reducer bearing. Both the length of the reducer bearing lubricating oil hole along the first direction and the length of the reducer bearing lubricating oil hole along the radial direction of the reducer input shaft are less than the length of the reducer end cover oil passage along the first direction. This helps properly allocate a flow rate of the cooling oil, and avoids that the cooling oil flowing into the reducer input shaft and the motor shaft is excessively small, thereby ensuring the cooling efficiency.

In an embodiment, the powertrain further includes the heat exchanger, the heat exchanger and the reducer end cover are arranged along a second direction, and the second direction is perpendicular to the first direction; and the reducer end cover, the heat exchanger, and the motor are arranged along the first direction; and the reducer end cover oil passage includes a radial oil passage of the reducer end cover and an axial oil passage of the reducer end cover, where the radial oil passage of the reducer end cover communicates with the axial oil passage of the reducer end cover, the radial oil passage of the reducer end cover extends along the radial direction of the reducer input shaft, and the axial oil passage of the reducer end cover extends along the axial direction of the reducer input shaft; and the radial oil passage of the reducer end cover communicates with the heat exchanger through the axial oil passage of the reducer end cover, the radial oil passage of the reducer end cover is configured to communicate with the radial oil passage of the oil guiding member, and projections of the radial oil passage of the reducer end cover and the radial oil passage of the oil guiding member along the radial direction of the reducer input shaft at least partially overlap.

In this embodiment of this application, the heat exchanger, the axial oil passage of the reducer end cover, and the radial oil passage of the reducer end cover are sequentially connected. Because the radial oil passage of the reducer end cover is located at the edge of the reducer along the first direction, if the axial oil passage of the reducer end cover is not disposed, the heat exchanger needs to be disposed close to the edge of the reducer, which easily causes the heat exchanger to fall down. Therefore, this solution improves structural stability of the heat exchanger. The radial oil passage of the reducer end cover communicates with the oil guiding passage in the oil guiding member, where the oil guiding passage includes the radial oil passage of the oil guiding member and the axial oil passage of the oil guiding member that communicate with each other, and projections of the radial oil passage of the reducer end cover and the radial oil passage of the oil guiding member in the oil guiding passage and the projection of the reducer input shaft in the radial direction at least partially overlap, so that the cooling oil can flow into the radial oil passage of the oil guiding member through the radial oil passage of the reducer end cover.

In an embodiment, the reducer end cover further includes a first axial limiting boss, where the first axial limiting boss protrudes, along a radial direction of the reducer input shaft, from an inner surface of the fastening hole towards the oil guiding member; and the reducer further includes a second axial limiting boss, where the second axial limiting boss protrudes, along the radial direction of the reducer input shaft, from an outer circumferential surface of the oil guiding member towards a hole wall of the fastening hole; along the first direction, the second axial limiting boss is located between the sealing member and the first axial limiting boss, and the first axial limiting boss and the second axial limiting boss are stacked along the first direction, so that the oil guiding member is limited between the sealing member and the first axial limiting boss along the first direction; and the first axial limiting boss includes a circumferential limiting groove, and the circumferential limiting groove is recessed, along the radial direction of the reducer input shaft, from an outer circumferential surface of the first axial limiting boss towards the inner surface of the fastening hole; the reducer further includes a circumferential limiting boss, and the circumferential limiting boss protrudes, along the radial direction of the reducer input shaft, from an outer surface of the oil guiding member towards the hole wall of the fastening hole; and the circumferential limiting boss is located on a side that is of the second axial limiting boss and that is close to the reducer input shaft along the first direction, and the circumferential limiting boss is located in the circumferential limiting groove. In this embodiment of this application, the first axial limiting boss, the second axial limiting boss, and the circumferential limiting boss are disposed to implement circumferential positioning and axial positioning between the oil guiding member and the reducer end cover.

According to the invention, the sealing member is sealed and fastened to an inner wall of the fastening hole by using a thread, so that the sealing member is sealed and fastened to the reducer end cover. The sealing member and the oil guiding member are made of different materials. Alternatively, a material of the sealing member is a metal material, and a material of the oil guiding member is a plastic material. According to the invention and as alternative, the hardness of the sealing member is greater than hardness of the oil guiding member.

In this embodiment of this application, the sealing member and the oil guiding member have different functions. The sealing member mainly performs sealing and axial limiting functions, and the material of the sealing member needs to be rigid. The oil guiding member mainly performs a function of guiding a flow direction of the cooling oil, and the material of the oil guiding member needs to be easy to process. In this solution, materials of the sealing member and the oil guiding member are different, so that the sealing member and the oil guiding member meet different use requirements. Specifically, using a metal material for the sealing member improves rigidity of the sealing member, and ensures that the cooling oil does not leak out of the powertrain from the fastening hole; and using a plastic material for the oil guiding member reduces processing difficulty of the radial oil passage of the oil guiding member and the axial oil passage of the oil guiding member, and reduces manufacturing costs of the oil guiding member. In this embodiment of this application, the sealing member can limit movement of the oil guiding member towards the sealing member along the first direction. In addition, because the sealing member is in sealed connection with the fastening hole, the sealing member can further implement sealing of the cooling oil, to prevent the cooling oil from leaking out of the powertrain from the fastening hole. In this solution, a conventional complex structure with an end cover, a bolt, and a sealing ring is simplified into a structure with a sealing member and an oil guiding member, so that the assembly difficulty is reduced, and the costs are reduced.

In an embodiment, the powertrain includes an integrated housing, the integrated housing further includes a reducer accommodating cavity, a controller accommodating cavity, a motor accommodating cavity, a direct current input interface mounting hole, and an alternating current output interface mounting hole, the motor includes a motor stator, the motor shaft, and a motor winding, the controller accommodating cavity and the motor accommodating cavity are arranged along a second direction, and the second direction is perpendicular to the first direction, and the controller accommodating cavity is configured to accommodate the motor controller, the reducer accommodating cavity communicates with the motor accommodating cavity and arranged along the first direction, the reducer accommodating cavity is configured to accommodate the reducer, and the controller accommodating cavity communicates with neither the reducer accommodating cavity nor the motor accommodating cavity, where the motor stator is fixedly nested in the motor accommodating cavity, and a wiring terminal of the motor winding and an output terminal of the motor shaft are arranged oppositely along the first direction;
the direct current input interface mounting hole and the alternating current output interface mounting hole respectively run through the integrated housing along the first direction and communicate with the controller accommodating cavity;
the direct current input interface mounting hole and the alternating current output interface mounting hole are arranged oppositely along the first direction, and the reducer end cover and the alternating current output interface mounting hole are arranged oppositely; and the alternating current output interface mounting hole and the wiring terminal of the motor winding are arranged on one side along the first direction, and the direct current input interface mounting hole and the reducer end cover are arranged on the other side along the first direction;
along the second direction, the sealing member and the oil guiding member are located below the direct current input interface mounting hole; and
along the first direction, a distance between the direct current input interface mounting hole and at least one of the sealing member or the oil guiding member is less than a distance between the alternating current output interface mounting hole and at least one of the sealing member or the oil guiding member.

In an embodiment, the motor controller includes a capacitor module, a power module, and a copper bar assembly, the power module and the capacitor module are configured to receive a direct current, the power module is configured to output an alternating current by using the copper bar assembly, and the controller accommodating cavity is configured to accommodate the capacitor module, the power module, and the copper bar assembly, where along the first direction, projections of the direct current input interface mounting hole and the alternating current output interface mounting hole at least partially overlaps with projections of the capacitor module and the power module;
the capacitor module and the power module are arranged in a stacked manner along the second direction, and the copper bar assembly and the power module are adjacently arranged along a third direction, where the third direction is perpendicular to the first direction and the second direction; and the power module includes a plurality of bridge arm modules that are sequentially and adjacently arranged along the first direction;
the reducer end cover and the controller accommodating cavity are arranged along the first direction, and a projection of the sealing member and projections of the capacitor module and the power module along the first direction do not overlap;
along the third direction, a projection of the motor shaft does not overlap with projections of the capacitor module and the power module, projections of the controller accommodating cavity and the motor accommodating cavity along the third direction at least partially overlap, and a length of an overlapping part between the controller accommodating cavity and the motor accommodating cavity in the third direction is less than an outer diameter of the motor stator; and
along the first direction, projections of the sealing member and the oil guiding member does not overlap with a projection of any one of the capacitor module, the power module, and the copper bar assembly.

In an embodiment, the integrated housing further includes a power interface mounting hole, the power interface mounting hole is configured to fasten a power interface, the power interface is configured to electrically connect onephase winding of the motor and an external power supply, the power interface mounting hole runs through the integrated housing along the first direction and communicates with the controller accommodating cavity, and the power interface mounting hole and the direct current input interface mounting hole are arranged oppositely along the first direction; and the alternating current output interface mounting holes and the power interface mounting holes are spaced apart along the third direction.

In an embodiment, the alternating current output interface mounting hole is located between the power interface mounting hole and the motor shaft along the second direction, the alternating current output interface mounting hole is located between the power interface mounting hole and the motor shaft along the third direction, and the third direction is perpendicular to the first direction and the second direction; along the first direction, projections of the sealing member and the oil guiding member do not overlap with a projection of the power interface mounting hole; and along the second direction and the third direction, both the sealing member and the oil guiding member are spaced apart from the power interface mounting hole.

According to a second aspect, an embodiment of this application provides an electric vehicle, including a vehicle body and the powertrain according to any one of the foregoing implementations, where the powertrain is fastened to the vehicle body, and the powertrain is configured to drive a wheel to rotate. The powertrain in this application meets design requirements such as miniaturization, power density, reliability, heat dissipation performance, and power performance, so as to improve overall performance of the electric vehicle.

### BRIEF DESCRIPTION OF DRAWINGS

To describe technical solutions in embodiments of this application more clearly, the following describes accompanying drawings used in embodiments of this application.
FIG. 1 is a diagram of a structure of an electric vehicle according to an embodiment of this application;
FIG. 2 is a diagram of a structure of a powertrain according to an embodiment of this application;
FIG. 3 is a sectional view of the powertrain shown in FIG. 2 along AA;
FIG. 4 is a partial exploded view of a powertrain according to an embodiment of this application;
FIG. 5 is a partial enlarged view of an M1 part of the powertrain shown in FIG. 3;
FIG. 6 is a partial enlarged view of an M2 part of the powertrain shown in FIG. 4;
FIG. 7 is a diagram of a structure of a reducer end cover according to an embodiment of this application;
FIG. 8 is a diagram of a structure of an oil guiding member according to an embodiment of this application;
FIG. 9 is a diagram of a partial structure of a powertrain according to an embodiment of this application;
FIG. 10 is a partial exploded view of a powertrain according to an embodiment of this application;
FIG. 11 is a diagram of a partial structure of a powertrain according to an embodiment of this application;
FIG. 12 is a diagram of a structure of a powertrain according to an embodiment of this application; and
FIG. 13 is a diagram of a partial structure of a powertrain according to an embodiment of this application.

### DESCRIPTION OF EMBODIMENTS

The following describes technical solutions in embodiments of this application with reference to accompanying drawings in embodiments of this application. It is clear that the described embodiments are merely some rather than all of embodiments of this application.

The terms "first", "second", and the like in this specification are merely intended for a purpose of description, and shall not be understood as an indication or implication of relative importance or implicit indication of a quantity of indicated technical features. Therefore, a feature limited by "first" or "second" may explicitly or implicitly include one or more features. In description of this application, unless otherwise stated, "a plurality of" means two or more than two.

In addition, in this specification, orientation terms such as "top" and "bottom" are defined relative to orientations of structures in the accompanying drawings. It should be understood that these position terms are relative concepts used for relative description and clarification, and may correspondingly change according to changes in the orientations of the structures.

For ease of understanding, English abbreviations and related technical terms used in embodiments of this application are first explained and described below.

Parallel: "Parallel" defined in embodiments of this application is not limited to being absolutely parallel. A definition of "parallel" may be understood as being basically parallel, and a case in which "non-absolute parallel" is caused by factors such as an assembly tolerance, a design tolerance, and a structural flatness is allowed.

Perpendicular: "Perpendicular" defined in embodiments of this application is not limited to a relationship of being absolutely perpendicularly intersected (an included angle is 90 degrees), a relationship of being not absolutely perpendicularly intersected that is caused by factors such as an assembly tolerance, a design tolerance, and a structural flatness is allowed, and an error within a small angle range is allowed. For example, a relationship within an assembly error range of 80 degrees to 100 degrees may be understood as a relationship of being perpendicular.

A first direction Y is parallel to an axial direction of a motor, where the axial direction of the motor is an axial direction of a motor shaft.

A second direction Z is perpendicular to the first direction Y and a third direction X.

The third direction X is perpendicular to the first direction Y and the second direction Z.

When a powertrain is in a working state, relatively high heat is generated inside the powertrain, and cooling oil needs to be fed into the powertrain, so as to control temperature rise of the powertrain. In this case, if more components are used in the powertrain to guide the cooling oil, an internal structure of the powertrain is complex, and processing costs and assembly difficulty are increased.

An embodiment of this application provides a split-type oil-passing powertrain. The powertrain includes a motor, a reducer, and a reducer end cover. A motor shaft of the motor is fastened to a reducer input shaft of the reducer. The reducer end cover, the reducer input shaft, and the motor shaft are arranged along a first direction, and the first direction is parallel to an axial direction of the reducer input shaft. The reducer end cover includes a sealing member, an oil guiding member, and a fastening hole that runs through the reducer end cover along the first direction. The sealing member and the oil guiding member are located in the fastening hole. The sealing member, the oil guiding member, and the reducer input shaft are sequentially arranged along the first direction. The oil guiding member is configured to transfer cooling oil to the reducer input shaft. According to the powertrain provided in this embodiment of this application, a structure used to guide the cooling oil is simplified into a structure with a sealing member and an oil guiding member, which reduces processing costs and assembly difficulty of the powertrain. In addition, the sealing member and the oil guiding member are disposed separately, so that an action force and wear on the oil guiding member can be significantly reduced, and a service life can be prolonged.

The split-type oil-passing powertrain provided in this embodiment of this application is used in an electric vehicle.

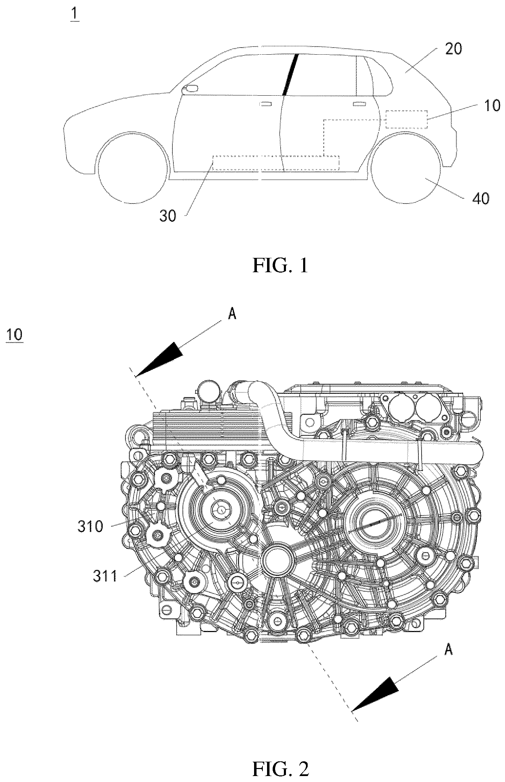

FIG. 1 is a diagram of a structure of an electric vehicle 1 according to an embodiment of this application. In this embodiment of this application, the electric vehicle 1 includes a powertrain 10, a vehicle body 20, a battery pack 30, and a wheel 40. The powertrain 10 and the battery pack 30 are fastened to the vehicle body 20. The powertrain 10 is configured to receive power supplied by the battery pack 30, and is configured to drive the wheel 40.

In this embodiment of this application, the battery pack 30 is also referred to as a power battery.

In this embodiment of this application, the electric vehicle 1 is a wheel-type device driven or towed by a power apparatus. In an implementation, the electric vehicle 1 includes a special operation vehicle such as a passenger vehicle, a commercial vehicle, or an engineering rescue vehicle, a sprinkler, a sewage sucker, a cement mixer, a crane, or a medical vehicle. For example, the electric vehicle 1 includes an electric vehicle (Electric Vehicle, EV), a pure electric vehicle/battery electric vehicle (Pure Electric Vehicle/Battery Electric Vehicle, PEV/BEV), a hybrid electric vehicle (Hybrid Electric Vehicle, HEV), a range extended electric vehicle (Range Extended Electric Vehicle, REEV), a plug-in hybrid electric vehicle (Plug-in Hybrid Electric Vehicle, PHEV), a new energy vehicle (New Energy Vehicle), and the like.

In this embodiment of this application, the electric vehicle 1 includes one or more powertrains 10. In an embodiment, the electric vehicle 1 is a front-wheel drive vehicle or a rear-wheel drive vehicle. The electric vehicle 1 includes one powertrain 10, and the powertrain 10 is configured to be in transmission connection with front wheels or rear wheels of the electric vehicle 1. In an embodiment, the electric vehicle 1 is a front and rear dual-wheel drive vehicle. The electric vehicle 1 includes two powertrains 10. The two powertrains 10 are respectively configured to be in transmission connection with the front wheels and the rear wheels of the electric vehicle 1. In an embodiment, the electric vehicle 1 is a front and rear four-wheel drive vehicle. The electric vehicle 1 includes four powertrains 10. The four powertrains 10 are respectively configured to be in transmission connection with four wheels of the electric vehicle 1.

The following describes in detail the powertrain 10 provided in this embodiment of this application.

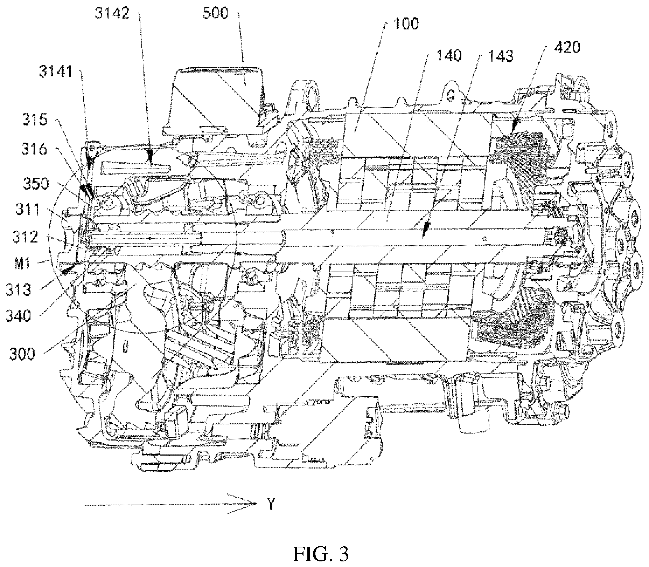

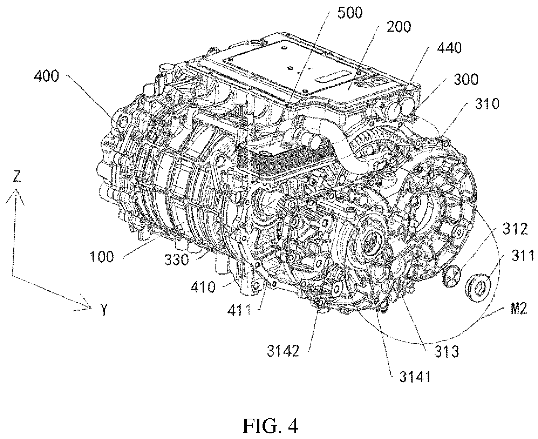

Refer to FIG. 2 to FIG. 4. FIG. 2 is a diagram of a structure of the powertrain 10 according to an embodiment of this application. FIG. 3 is a sectional view of the powertrain 10 shown in FIG. 2 along AA. FIG. 4 is a partial exploded view of the powertrain 10 according to an embodiment of this application.

In an embodiment, the powertrain 10 includes a motor 100, a motor controller 200, and a reducer 300. The motor controller 200 is configured to receive a direct current of a battery pack 30, and is configured to output an alternating current to the motor 100. The motor 100 is configured to receive an alternating current output by the motor controller 200, and is configured to drive the wheel 40 of the electric vehicle 1. The reducer 300 is configured to transfer power output by the motor 100 to the wheel 40.

In an embodiment, the powertrain 10 includes an integrated housing 400. The integrated housing 400 includes a motor accommodating cavity 420 and a reducer accommodating cavity 410. The motor accommodating cavity 420 is configured to accommodate the motor 100, the reducer accommodating cavity 410 is configured to accommodate the reducer 300 (as shown in FIG. 3), and the reducer accommodating cavity 410 has a reducer opening 411 (as shown in FIG. 4) that communicates with outside.

In an embodiment, the powertrain 10 further includes a reducer end cover 310 (as shown in FIG. 4) and a motor end cover (not shown). The reducer end cover 310 is configured to cover the reducer opening 411 (with reference to FIG. 2 and FIG. 4). The motor end cover is configured to cover an opening of the motor accommodating cavity 420. In this embodiment of this application, the reducer 300 is located in mounting space enclosed by the reducer accommodating cavity 410 and the reducer end cover 310. The reducer accommodating cavity 410 and the reducer end cover 310 can reduce impact of an external environment on the reducer 300.

In an embodiment, the reducer 300 includes a reducer input shaft 330 (as shown in FIG. 3 and FIG. 4). The reducer input shaft 330 in the reducer 300 is fastened to the motor shaft 140 of the motor 100, and the reducer input shaft 330 is configured to receive mechanical energy transmitted by the motor shaft 140 and drive the wheel to rotate. In an embodiment, the reducer 300 further includes a reducer bearing, a gear assembly, and the like.

In an embodiment, the reducer end cover 310 includes a sealing member 311, an oil guiding member 312, and a fastening hole 313 (as shown in FIG. 3 and FIG. 4) that runs through the reducer end cover 310 along a first direction Y. The sealing member 311 and the oil guiding member 312 are located in the fastening hole 313 (as shown in FIG. 3 and FIG. 4), and the sealing member 311 is fastened in the fastening hole 313 (as shown in FIG. 3 and FIG. 4). The reducer input shaft 330 is located in the reducer accommodating cavity 410 and is configured to be fastened to the motor shaft 140 of the motor 100 (as shown in FIG. 3). The sealing member 311, the oil guiding member 312, and the reducer input shaft 330 are sequentially arranged along the first direction Y (as shown in FIG. 3). The sealing member and the oil guiding member are spaced apart along the first direction (not shown in the figure), where the first direction Y is parallel to an axial direction of the reducer input shaft 330. The oil guiding member 312 is configured to transfer cooling oil to the reducer input shaft 330. In an embodiment, the oil guiding member 312 is configured to guide the cooling oil from outside of the reducer accommodating cavity 410 into inside of the reducer accommodating cavity 410. In an embodiment, types of the cooling oil include ethylene glycol-based cooling oil, propylene glycol-based cooling oil, glycerin-based cooling oil, mineral oil, and the like.

In this embodiment of this application, the sealing member 311 and the oil guiding member 312 in the reducer end cover 310 are located in the fastening hole 313, and the sealing member 311, the oil guiding member 312, and the reducer input shaft 330 are sequentially arranged along the first direction Y. In other words, the sealing member 311 is closer to the outside of the reducer 300 than the oil guiding member 312. The sealing member 311 fastened to the fastening hole 313 can prevent the oil guiding member 312 from having a relatively large offset in the first direction Y, thereby ensuring that the oil guiding member 312 can stably guide the cooling oil. The oil guiding member 312 communicates with the reducer accommodating cavity 410, and the cooling oil flows into the reducer accommodating cavity 410 through the oil guiding member 312, so as to cool and dissipate heat for the reducer 300 in the reducer accommodating cavity 410, thereby ensuring that the components inside the powertrain 10 work in a proper temperature range.

In an embodiment, there is a gap between the sealing member 311 and the oil guiding member 312, that is, a small degree of movement is allowed between the sealing member 311 and the oil guiding member 312 along the first direction Y, which can effectively prevent fracturing.

In this embodiment of this application, a combination of the sealing member 311 and the oil guiding member 312 can guide the cooling oil into the reducer 300. If the sealing member 311 and the oil guiding member 312 are combined into an integrated structure, for example, a structure used for flow guiding is processed in the sealing member 311, a structure of the sealing member 311 is excessively complex, and processing difficulty is increased. In addition, when the sealing member 311 is fastened to the reducer end cover 310, a relatively large pre-tightening stress usually needs to be applied. Consequently, the flow guiding structure in the sealing member 311 is easy to deform under a force, which affects flow guiding effect. However, in this embodiment of this application, the structure used for flow guiding is disposed as the sealing member 311 and the oil guiding member 312. This reduces processing difficulty and manufacturing costs of the components. In addition, the sealing member 311 and the oil guiding member 312 are two independent components and are spaced apart from each other, so that an action force and wear on the oil guiding member 312 can be significantly reduced, a service life can be prolonged, and flow guiding effect of the oil guiding member 312 can be ensured.

In this embodiment of this application, the powertrain 10 is disposed, so that the cooling oil can be guided into the powertrain 10 through the oil guiding member 312, and a temperature of the powertrain 10 in a steady working state is reduced, thereby improving working efficiency and a service life of the powertrain 10. The sealing member 311 and the oil guiding member 312 are separately disposed components. This simplifies the structure compared with an integrated structure, and it is more convenient to separately process the sealing member 311 and the oil guiding member 312, thereby reducing processing difficulty and costs. The sealing member 311 and the oil guiding member 312 are disposed separately, so that an action force and wear on the oil guiding member 312 can be significantly reduced, a service life can be prolonged, and flow guiding effect of the oil guiding member 312 can be ensured.

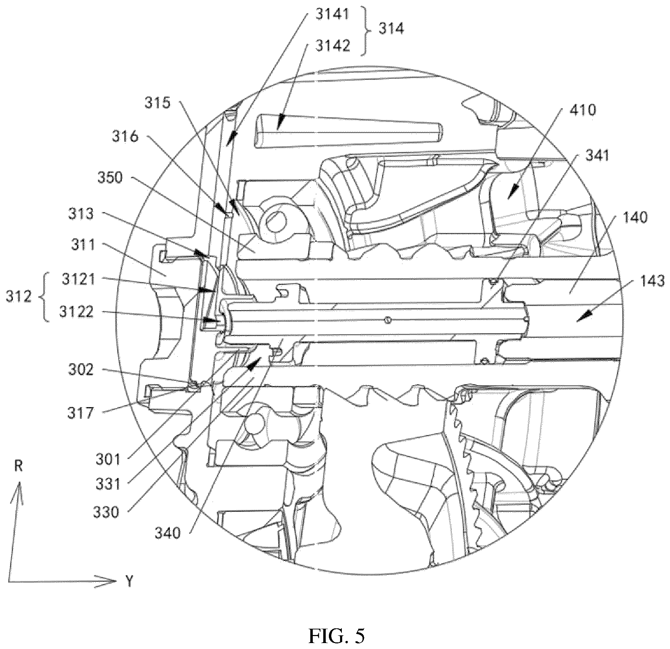

Refer to FIG. 3 and FIG. 5. FIG. 5 is a partial enlarged view of an M1 part of the powertrain 10 shown in FIG. 3. In an embodiment, the oil guiding member 312 includes a radial oil passage 3121 of the oil guiding member and an axial oil passage 3122 of the oil guiding member that communicate with each other (as shown in FIG. 5), and extension directions of the radial oil passage 3121 of the oil guiding member and the axial oil passage 3122 of the oil guiding member intersect (as shown in FIG. 5). The radial oil passage 3121 of the oil guiding member is configured to communicate with a heat exchanger 500 (as shown in FIG. 3 and FIG. 5), and the axial oil passage 3122 of the oil guiding member is configured to communicate with the reducer accommodating cavity 410 through the reducer input shaft 330 (as shown in FIG. 5). An extension direction of the radial oil passage 3121 of the oil guiding member is parallel to a radial direction R of the reducer input shaft 330, an extension direction of the axial oil passage 3122 of the oil guiding member is parallel to an axial direction of the reducer input shaft 330, and the axial oil passage 3122 of the oil guiding member and the reducer input shaft 330 are spaced apart along the first direction Y.

In this embodiment of this application, the heat exchanger 500 is configured to input the cooling oil to the powertrain 10. The cooling oil sequentially flows through the radial oil passage 3121 of the oil guiding member, the axial oil passage 3122 of the oil guiding member, and the reducer input shaft 330, and then flows to the reducer accommodating cavity 410. The oil guiding member 312 communicates with the reducer input shaft 330 through the axial oil passage 3122 of the oil guiding member, and an extension direction of the axial oil passage 3122 of the oil guiding member is parallel to an axial direction of the reducer input shaft 330, that is, the axial oil passage 3122 of the oil guiding member extends along the first direction Y. This reduces flow resistance of the cooling oil in the oil guiding member 312 and the reducer input shaft 330, and improves cooling efficiency.

In this embodiment of this application, the axial oil passage 3122 of the oil guiding member and the reducer input shaft 330 are spaced apart along the first direction Y, so that the reducer input shaft 330 is isolated from the oil guiding member 312, thereby facilitating rotation of the reducer input shaft 330, and reducing friction between the reducer input shaft 330 and the oil guiding member 312.

Still refer to FIG. 5. In an embodiment, the reducer input shaft 330 includes a reducer shaft cavity 331, the motor shaft 140 includes a motor shaft cavity 143, the reducer 300 further includes an oil pipe 340, the reducer 300 is configured to accommodate the oil pipe 340, and the oil pipe 340 is configured to enable the oil guiding member 312 and the motor shaft cavity 143 to communicate with each other. Along the first direction Y, the reducer shaft cavity 331 runs through the reducer input shaft 330, and the motor shaft cavity 143 runs through the motor shaft 140. The oil pipe 340, the oil guiding member 312, and the sealing member 311 are spaced apart along the first direction Y.

In this embodiment of this application, both the reducer shaft cavity 331 and the motor shaft cavity 143 extend along the first direction Y, the oil pipe 340 is located in the reducer shaft cavity 331 and is located on a side that is of the oil guiding member 312 and that is away from the sealing member 311 along the first direction Y, and the oil pipe 340 communicates with the reducer accommodating cavity 410 through the reducer shaft cavity. The oil guiding member 312 communicates with the reducer accommodating cavity 410 through the reducer input shaft 330. Further, the axial oil passage 3122 of the oil guiding member communicates with the motor shaft cavity 143 by using the oil pipe 340. The cooling oil may sequentially cool the reducer shaft cavity 331 and the motor shaft cavity 143 by using the oil guiding member 312 and the oil pipe 340. This provides a prerequisite for subsequently cooling an internal structure of the motor 100, and improves cooling efficiency of the cooling oil inside the powertrain 10. The sealing member 311, the oil guiding member 312, and the oil pipe 340 are spaced apart along the first direction Y, and the sealing member 311 is fastened in the fastening hole 313, so that the oil guiding member 312 and the oil pipe 340 can be slightly displaced in the first direction Y. This reduces wear between the sealing member 311 and the oil guiding member 312 and wear between the oil guiding member 312 and the oil pipe 340, thereby improving the service life. In addition, this prevents the oil guiding member 312 from being damaged because the oil guiding member 312 is squeezed when the sealing member 311 is used for sealing and fastening in the fastening hole 313.

In an embodiment, there is a gap between the axial oil passage 3122 of the oil guiding member and the oil pipe 340 along an axial direction of the reducer input shaft 330, an inner diameter of the oil pipe 340 is greater than an inner diameter of the axial oil passage 3122 of the oil guiding member, and a projection of the axial oil passage 3122 of the oil guiding member along the first direction Y falls within a projection of the oil pipe 340 along the first direction Y. The projection of the axial oil passage 3122 of the oil guiding member along the first direction Y is a projection of an area enclosed by a hole wall of the axial oil passage 3122 of the oil guiding member along the first direction Y. The projection of the oil pipe 340 along the first direction Y is a projection of an area enclosed by a pipe wall of the oil pipe 340 along the first direction Y.

In this embodiment of this application, the axial oil passage 3122 of the oil guiding member and the oil pipe 340 are spaced apart along the first direction Y, so that when the reducer input shaft 330 rotates at a high speed, the oil guiding member 312 and the oil pipe 340 can implement non-contact oil guiding. This avoids wear between the oil guiding member 312 and the oil pipe 340, and avoids heat generation due to the wear, so that the cooling oil can cool and dissipate heat for a heating component inside the powertrain 10. Therefore, this implementation can not only reduce a failure risk of the oil guiding member 312 and a failure risk of the oil pipe 340, but also improve utilization of the cooling oil and enhance heat dissipation effect. In addition, in this solution, the inner diameter of the oil pipe 340 is set to be greater than the inner diameter of the axial oil passage 3122 of the oil guiding member, and the projection of the oil pipe 340 along the first direction Y overlaps with the projection of the axial oil passage 3122 of the oil guiding member along the first direction Y, so that in a process in which the cooling oil flows from the axial oil passage 3122 of the oil guiding member to the oil pipe 340, flow resistance is reduced, and a flow rate is increased, thereby improving cooling efficiency of the cooling oil.

It should be noted that, in this embodiment of this application, the projection along the first direction Y is a projection along the first direction Y on a projection surface perpendicular to the first direction Y, where the projection surface of the projection along the first direction Y is perpendicular to the first direction Y. A projection along a second direction Z is a projection along the second direction Z on a projection surface perpendicular to the second direction Z, where the projection surface of the projection along the second direction Z is perpendicular to the second direction Z. A projection along a third direction X is a projection along the third direction X on a projection surface perpendicular to the third direction X, where the projection surface of the projection along the third direction X is perpendicular to the third direction X.

Still refer to FIG. 5. In an embodiment, the reducer 300 further includes a sleeve structure 301, and the sleeve structure 301 is sleeved on the oil pipe 340. The sleeve structure 301, the oil guiding member 312, and the sealing member 311 are arranged along the first direction Y, and the sleeve structure 301 is fastened to the oil guiding member 312. The projection of the axial oil passage 3122 of the oil guiding member along the first direction Y falls within a projection of the sleeve structure 301 along the first direction Y, and along a radial direction R of the reducer input shaft 330, there is a gap between an inner surface that is of the sleeve structure 301 and that faces the oil pipe 340 and an outer surface of that is of the oil pipe 340 and that faces the sleeve structure 301. The projection of the sleeve structure 301 along the first direction Y is a projection of an area enclosed by an inner wall of the sleeve structure 301 along the first direction Y.

In this embodiment of this application, the sleeve structure 301 is located on a surface that is of the oil guiding member 312 and that faces the oil pipe 340 along the first direction Y, the sleeve structure 301 is sleeved on an outer side of the oil pipe 340, and the sleeve structure 301 and the oil pipe 340 are spaced apart along the radial direction R of the reducer input shaft 330, so that wear between the sleeve structure 301 and the oil pipe 340 can be reduced, and a service life of the oil guiding member 312 and a service life of the oil pipe 340 can be prolonged. The sleeve structure 301 respectively communicates with the axial oil passage 3122 of the oil guiding member and the oil pipe 340 along two ends of the first direction Y. Because a size of the axial oil passage 3122 of the oil guiding member in the first direction Y is relatively small, effect of guiding a flow direction of the cooling oil is limited. In addition, the axial oil passage 3122 of the oil guiding member and the oil pipe 340 are spaced apart along the first direction Y, and the sleeve structure 301 is disposed on a side that is of the axial oil passage 3122 of the oil guiding member and that is close to the oil pipe 340. When the reducer input shaft 330 rotates, leakage of a part of cooling oil from the gap between the axial oil passage 3122 of the oil guiding member and the oil pipe 340 can be reduced, and the sleeve structure 301 can guide a flow direction of the leaked cooling oil, so that the cooling oil finally enters the reducer shaft cavity 331. This increases an amount of the cooling oil entering the reducer shaft cavity 331, and then increases an amount of the cooling oil entering the motor 100 from the reducer shaft cavity 331, thereby comprehensively improving cooling efficiency. In this solution, the sleeve structure 301 is disposed to further guide the flow direction of the cooling oil, thereby improving utilization of the cooling oil.

In an embodiment, the oil guiding member 312 and the sleeve structure 301 are integrally formed. This solution improves structural reliability of the oil guiding member 312, so that the oil guiding member 312 can stably guide the flow direction of the cooling oil, thereby avoiding leakage of the cooling oil.

Still refer to FIG. 3 and FIG. 5. In an embodiment, the reducer shaft cavity 331 is further configured to accommodate a part of the motor shaft 140, and there is a gap (as shown in FIG. 5) between an outer circumferential surface of the motor shaft 140 and an inner wall of the reducer shaft cavity 331 along the radial direction R of the reducer input shaft 330. The motor shaft cavity 143 is configured to accommodate a part of the oil pipe 340. There is an oil gap between the oil pipe 340 and an inner wall of the motor shaft cavity 143 along a radial direction of the motor 100. An oil pipe sealing boss 341 is disposed on an outer circumferential surface of a part that is of the oil pipe 340 and that is not located in the motor shaft cavity 143 (as shown in FIG. 5). The reducer input shaft 330 is connected to the inner wall of the reducer shaft cavity 331 in a radial direction in a sealing manner with the oil duct sealing boss 341 (as shown in FIG. 5), and the oil pipe sealing boss 341 and the motor shaft 140 are spaced apart along the first direction Y (as shown in FIG. 5).

In this embodiment of this application, one end of the motor shaft 140 is located in the reducer shaft cavity 331, the motor shaft 140 is fixedly connected to the reducer input shaft 330, and the motor shaft 140 is configured to output power to the reducer input shaft 330. In the radial direction R of the reducer input shaft 330, there is a fitting gap between an outer circumferential surface of the motor shaft 140 located in the reducer shaft cavity 331 and an inner wall of the reducer shaft cavity 331, so as to reduce wear between the motor shaft 140 and the reducer input shaft 330. There is an oil gap between the partial oil pipe 340 located in the motor shaft cavity 143 and the inner wall of the motor shaft cavity 143, and the oil pipe sealing boss 341 and the motor shaft 140 are spaced apart along the first direction Y, which is equivalent to that there is a fitting gap between the oil pipe sealing boss 341 and an end face of the motor shaft 140 along the first direction Y. A part of cooling oil in the oil pipe 340 can flow into the reducer accommodating cavity 410 through the fitting gap and the oil gap, so that the cooling oil can cool both the reducer shaft cavity 331 and the reducer accommodating cavity 410. In addition, it may be understood that the fitting gap is usually set to a relatively small value, and a flow rate of the cooling oil at the fitting gap is far less than a flow rate in the reducer shaft cavity 331. Setting the fitting gap does not enable a large amount of cooling oil to be diverted, and most of the cooling oil enters the motor shaft cavity 143 mainly through the oil pipe 340.

In this embodiment of this application, a part of the oil pipe 340 is located in the motor shaft cavity 143, so that the oil pipe 340 communicates with the motor shaft cavity 143, and the cooling oil may cool inside of the motor 100 by using the oil pipe 340 and the motor shaft cavity 143. The oil pipe sealing boss 341 is in sealed connection with the inner wall of the reducer shaft cavity 331 along the radial direction of the reducer input shaft 330, so as to implement radial positioning of the oil pipe 340.

Still refer to FIG. 3 and FIG. 5. In an embodiment, a reducer end cover oil passage 314 (as shown in FIG. 5) is disposed in the reducer end cover 310, the reducer end cover oil passage 314 is configured to communicate with the heat exchanger 500 to transfer the cooling oil in the heat exchanger 500 (as shown in FIG. 3 and FIG. 5), and the oil guiding member 312 is configured to communicate with the reducer end cover oil passage 314 (as shown in FIG. 5). Projections of the reducer end cover oil passage 314 and the radial oil passage 3121 of the oil guiding member along the radial direction R of the reducer input shaft 330 at least partially overlap. The projection of the reducer end cover oil passage 314 along the radial direction R of the reducer input shaft 330 is a projection of the area enclosed by the hole wall of the reducer end cover oil passage 314 along the radial direction R of the reducer input shaft 330. The projection of the radial oil passage 3121 of the oil guiding member along the radial direction R of the reducer input shaft 330 is a projection of the area enclosed by the hole wall of the radial oil passage 3121 of the oil guiding member along the radial direction R of the reducer input shaft 330. A projection surface of the reducer end cover oil passage 314 is the same as a projection surface of the radial oil passage 3121 of the oil guiding member along the radial direction R of the reducer input shaft 330.

In this embodiment of this application, two ends of the reducer end cover oil passage 314 are respectively connected to the heat exchanger 500 and the oil guiding member 312, and the heat exchanger 500 transfers the cooling oil to the reducer end cover oil passage 314. Because projections of the reducer end cover oil passage 314 and the projection of the radial oil passage 3121 of the oil guiding member along the radial direction R of the reducer input shaft 330 at least partially overlap, the cooling oil can enter the radial oil passage 3121 of the oil guiding member through the reducer end cover oil passage 314, and the reducer end cover oil passage 314 guides the flow direction of the cooling oil. The oil guiding member 312 communicates with the reducer input shaft 330, the oil pipe 340, and the motor shaft 140. The reducer input shaft 330 and the motor shaft 140 are disposed in a hollow shape. The reducer end cover oil passage 314 further communicates with the motor shaft 140 through the reducer input shaft 330. The reducer input shaft 330 is configured to communicate with the reducer accommodating cavity 410, and the motor shaft 140 is configured to communicate with the motor accommodating cavity 420. One channel of the cooling oil output by the heat exchanger 500 enters the motor accommodating cavity 420 through the oil pipe 340 and the motor shaft cavity 143, and the other channel of the cooling oil output by the heat exchanger 500 enters the reducer accommodating cavity 410 through the oil pipe 340, the motor shaft 140, and the reducer shaft cavity 331.

Still refer to FIG. 5. In an embodiment, the reducer 300 further includes a reducer bearing 350. The reducer end cover 310 includes a reducer bearing chamber 315. The reducer bearing chamber 315 is recessed along the first direction Y from the reducer end cover 310 to a direction away from the reducer input shaft 330. The reducer bearing 350 is sleeved on the reducer input shaft 330 and located in the reducer bearing chamber 315. The reducer end cover 310 further includes a reducer bearing lubricating oil hole 316. The reducer bearing lubricating oil hole 316 is configured to enable the reducer end cover oil passage 314 and the reducer bearing chamber 315 to communicate with each other. The reducer end cover oil passage 314, the reducer bearing lubricating oil hole 316, and the reducer bearing chamber 315 are arranged along a first direction Y. The reducer bearing lubricating oil hole 316 and the radial oil passage 3121 of the oil guiding member are spaced apart along a radial direction R of the reducer input shaft 330.

The reducer input shaft 330 is rotationally connected to the reducer end cover 310 by using the reducer bearing 350, the reducer bearing 350 is located in the reducer bearing chamber 315, and the reducer bearing chamber 315 is recessed in a direction away from the reducer input shaft 330 along the first direction Y. The reducer bearing 350 is configured to bear load from the reducer input shaft 330 to reduce friction and ensure that the reducer 300 runs stably in a high-speed working condition. If the reducer bearing 350 is insufficiently lubricated, the reducer bearing 350 may be ablated or damaged. In this embodiment of this application, the reducer end cover oil passage 314 and the reducer bearing 350 are spaced apart. A reducer bearing lubricating oil hole 316 is provided along the first direction Y on a side wall that is of the reducer end cover oil passage 314 and that is close to the reducer bearing 350. The reducer end cover oil passage 314, the reducer bearing lubricating oil hole 316, and the reducer bearing chamber 315 are arranged along the first direction Y, so that when the cooling oil flows from the heat exchanger 500 through the reducer end cover oil passage 314, a part of cooling oil enters the reducer bearing chamber 315 through the reducer bearing lubricating oil hole 316, to lubricate the reducer bearing 350. This avoids damage to the reducer bearing 350, improves the service life, and ensures long-term stable running of the reducer 300. The reducer bearing lubricating oil hole 316 and the radial oil passage 3121 of the oil guiding member are spaced apart along the radial direction R of the reducer input shaft 330, so that the cooling oil that has entered the radial oil passage 3121 of the oil guiding member is not affected by the reducer bearing lubricating oil hole 316.

Still refer to FIG. 5. In an embodiment, projections of the reducer bearing lubricating oil hole 316 and the reducer bearing chamber 315 along the first direction Y at least partially overlap; along the radial direction R of the reducer input shaft 330, a distance between the reducer bearing lubricating oil hole 316 and the axial line of the reducer input shaft 330 is less than an outer diameter of the reducer bearing chamber 315; a length of the reducer bearing lubricating oil hole 316 along the first direction Y and a length of the reducer bearing lubricating oil hole 316 along the radial direction R of the reducer input shaft 330 are both less than a length of the reducer end cover oil passage 314 along the first direction Y; and the projection of the reducer bearing lubricating oil hole 316 along the first direction Y is a projection of an area enclosed by a hole wall of the reducer bearing lubricating oil hole 316 along the first direction Y.

In this embodiment of this application, the projection of the reducer bearing lubricating oil hole 316 in the first direction Y at least partially overlaps with the projection of the reducer bearing chamber 315 in the first direction Y, so that the cooling oil can enter the reducer bearing chamber 315 through the reducer bearing lubricating oil hole 316, to lubricate the reducer bearing 350 in the reducer bearing chamber 315. In the radial direction R of the reducer input shaft 330, the distance between the reducer bearing lubricating oil hole 316 and an axial line of the reducer input shaft 330 is less than the outer diameter of the reducer bearing chamber 315. This ensures that the cooling oil does not flow into an area other than the reducer bearing chamber 315 after flowing into the reducer bearing lubricating oil hole 316, thereby ensuring cooling effect of the cooling oil on the reducer bearing 350. The length of the reducer bearing lubricating oil hole 316 along the first direction Y and the length of the reducer bearing lubricating oil hole 316 along the radial direction R of the reducer input shaft 330 are both less than the length of the reducer end cover oil passage 314 along the first direction Y, which helps properly allocate a flow rate of cooling oil, and avoids that cooling oil flowing into the reducer input shaft 330 and the motor shaft 140 is excessively small, thereby ensuring cooling efficiency.

Still refer to FIG. 3 to FIG. 5. In an embodiment, the powertrain 10 further includes a heat exchanger 500 (as shown in FIG. 4), and the heat exchanger 500 and the reducer end cover 310 are arranged along the second direction Z (as shown in FIG. 4), where the second direction Z is perpendicular to the first direction Y. The reducer end cover 310, the heat exchanger 500, and the motor 100 are arranged along the first direction Y. The reducer end cover oil passage 314 includes a radial oil passage 3141 of the reducer end cover and an axial oil passage 3142 of the reducer end cover (as shown in FIG. 5), the radial oil passage 3141 of the reducer end cover extends along the radial direction R of the reducer input shaft 330, the axial oil passage 3142 of the reducer end cover extends along the axial direction of the reducer input shaft 330, and the radial oil passage 3141 of the reducer end cover communicates with the axial oil passage 3142 of the reducer end cover (as shown in FIG. 5). The radial oil passage 3141 of the reducer end cover communicates with the heat exchanger 500 through the axial oil passage 3142 of the reducer end cover (as shown in FIG. 3 and FIG. 5), the radial oil passage 3141 of the reducer end cover is configured to communicate with a radial oil passage (as shown in FIG. 5), and projections of the radial oil passage 3141 of the reducer end cover and the guiding radial oil passage along the radial direction R of the reducer input shaft 330 at least partially overlap.

In this embodiment of this application, the heat exchanger 500, the axial oil passage 3142 of the reducer end cover, and the radial oil passage 3141 of the reducer end cover are sequentially connected. Because the radial oil passage 3141 of the reducer end cover is located at the edge of the reducer 300 along the first direction Y, if the axial oil passage 3142 of the reducer end cover is not disposed, the heat exchanger 500 needs to be disposed close to the edge of the reducer 300, which easily causes the heat exchanger 500 to fall down. Therefore, this solution improves structural stability of the heat exchanger 500. The radial oil passage 3141 of the reducer end cover communicates with the oil guiding passage in the oil guiding member 312, where the oil guiding passage includes the radial oil passage 3121 of the oil guiding member and the axial oil passage 3122 of the oil guiding member that communicate with each other, and projections of the radial oil passage 3141 of the reducer end cover and the radial oil passage 3121 of the oil guiding member in the oil guiding passage and the projection of the reducer input shaft 330 in the radial direction R at least partially overlap, so that the cooling oil can flow into the radial oil passage 3121 of the oil guiding member through the radial oil passage 3141 of the reducer end cover.

In an embodiment, the heat exchanger 500, the oil guiding member 312, and the sealing member 311 are spaced apart along the first direction Y.

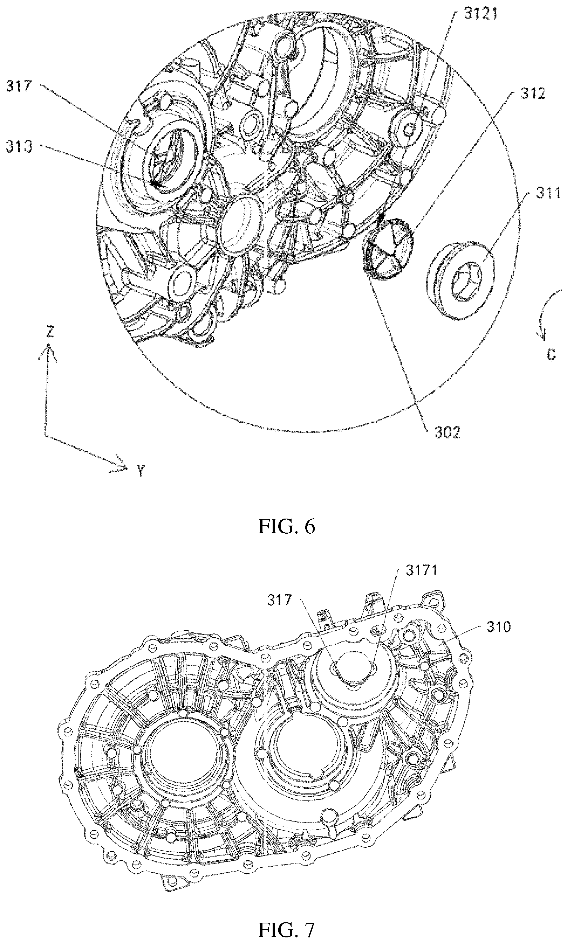

Refer to FIG. 5 and FIG. 6. FIG. 6 is a partial enlarged view of an M2 part of the powertrain 10 shown in FIG. 4. The reducer end cover 310 further includes a first axial limiting boss 317 (as shown in FIG. 5 and FIG. 6), and the first axial limiting boss 317 protrudes from an inner surface of the fastening hole 313 towards the oil guiding member 312 along the radial direction R of the reducer input shaft 330 (as shown in FIG. 5 and FIG. 6). The reducer 300 further includes a second axial limiting boss 302 (as shown in FIG. 5 and FIG. 6), and the second axial limiting boss 302 protrudes from an outer circumferential surface of the oil guiding member 312 along the radial direction R of the reducer input shaft 330 towards a hole wall of the fastening hole 313 (as shown in FIG. 5 and FIG. 6).

Along the first direction Y, the second axial limiting boss 302 is located between the sealing member 311 and the first axial limiting boss 317 (as shown in FIG. 5 and FIG. 6), and the first axial limiting boss 317 and the second axial limiting boss 302 are stacked along the first direction Y (as shown in FIG. 5), so that the oil guiding member 312 is limited between the sealing member 311 and the first axial limiting boss 317 along the first direction Y.

In this embodiment of this application, both the sealing member 311 and the oil guiding member 312 are located in the fastening hole 313, the sealing member 311, the second axial limiting boss 302 of the oil guiding member 312, and the first axial limiting boss 317 of the fastening hole 313 are sequentially arranged along the first direction Y, and the first axial limiting boss 317 and the second axial limiting boss 302 overlap along the first direction Y, so as to limit movement of the oil guiding member 312 away from the sealing member 311 along the first direction Y, that is, the sealing member 311 and the first axial limiting boss 317 are combined to implement axial limiting on the oil guiding member 312. When the powertrain 10 is affected by an external force, a position of the oil guiding member 312 in the reducer 300 does not change greatly.

In an embodiment, the second axial limiting boss 302 and the radial oil passage 3121 of the oil guiding member are spaced apart along a circumferential direction C of the oil guiding member 312 (as shown in FIG. 6). In this embodiment of this application, the second axial limiting boss 302 and the radial oil passage 3121 of the oil guiding member are spaced apart along the circumferential direction C of the oil guiding member 312, so that circulation of the cooling oil is not interfered with by the second axial limiting boss 302.

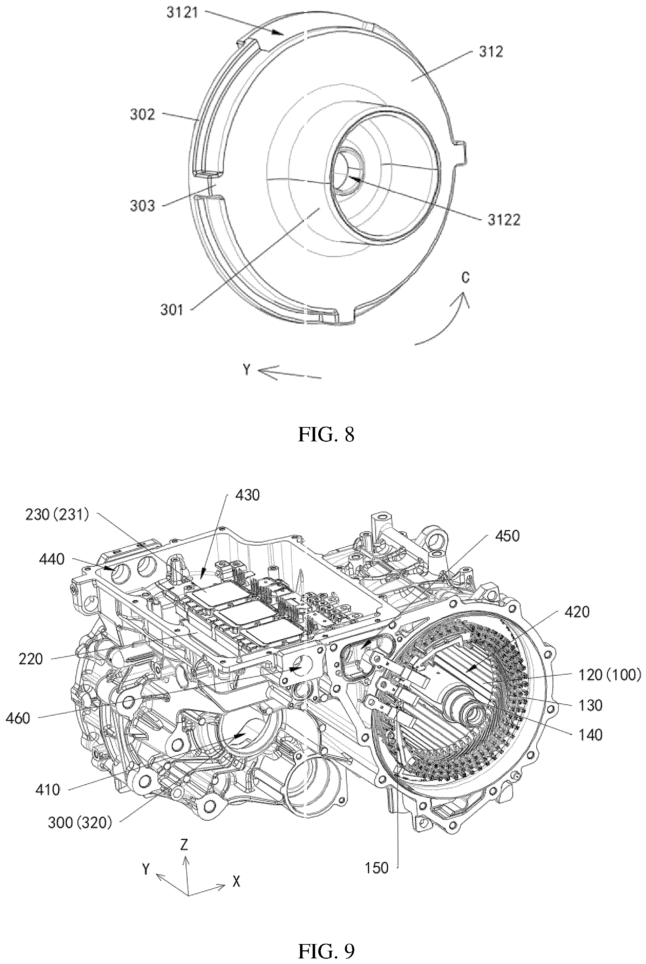

Refer to FIG. 7 and FIG. 8. FIG. 7 is a diagram of a structure of a reducer end cover 310 according to an embodiment of this application. FIG. 8 is a diagram of a structure of an oil guiding member 312 according to an embodiment of this application. In an embodiment, the first axial limiting boss 317 includes a circumferential limiting groove 3171 (as shown in FIG. 7). The circumferential limiting groove 3171 is recessed, along the radial direction R of the reducer input shaft 330, from an outer circumferential surface of the first axial limiting boss 317 to an inner surface of the fastening hole 313 (as shown in FIG. 7). The reducer 300 further includes a circumferential limiting boss 303, and the circumferential limiting boss 303 protrudes from an outer surface of the oil guiding member 312 towards a hole wall of the fastening hole 313 along the radial direction R of the reducer input shaft 330 (as shown in FIG. 8). The circumferential limiting boss 303 is located on a side that is of the second axial limiting boss 302 and that is close to the circumferential limiting groove 3171 along the first direction Y (as shown in FIG. 7 and FIG. 8), and the circumferential limiting boss 303 is located on a side that is of the second axial limiting boss 302 and that is close to the reducer input shaft 330 along the first direction Y (as shown in FIG. 7 and FIG. 8). The circumferential limiting boss 303 is located in the circumferential limiting groove 3171 (as shown in FIG. 7 and FIG. 8).

In this embodiment of this application, a recess direction of the circumferential limiting groove 3171 is the same as a protrusion direction of the circumferential limiting boss 303, and the circumferential limiting groove 3171 cooperates with the circumferential limiting boss 303, so as to perform circumferential limiting on the oil guiding member 312, so that when the reducer 300 is in a high-speed working condition, the oil guiding member 312 does not rotate substantially in a circumferential direction of the reducer input shaft 330. The circumferential limiting boss 303 is disposed close to the second axial limiting boss 302. When the circumferential limiting boss 303 is located in the circumferential limiting groove 3171, the first axial limiting boss 317 and the second axial limiting boss 302 are stacked along a first direction Y, to reduce an amplitude of displacement of the oil guiding member 312 in an axial direction and a circumferential direction of the reducer input shaft 330, and ensure that the reducer 300 runs properly and stably.

In an embodiment, in the circumferential direction of the reducer input shaft 330, a size value of a groove bottom of the circumferential limiting groove 3171 is greater than a size value of the circumferential limiting boss 303 (as shown in FIG. 7 and FIG. 8). In this embodiment of this application, a circumferential size value of the groove bottom of the circumferential limiting groove 3171 is greater than a circumferential size value of the circumferential limiting boss 303, so that the circumferential limiting boss 303 can be mounted on the circumferential limiting groove 3171, and wear between the circumferential limiting boss 303 and the circumferential limiting groove 3171 can be reduced.

In an embodiment, a plurality of circumferential limiting grooves 3171 are spaced apart on the first axial limiting boss 317, the oil guiding member 312 includes a plurality of circumferential limiting bosses 303, and a quantity of the circumferential limiting grooves 3171 is equal to a quantity of the circumferential limiting bosses 303. In this embodiment of this application, the plurality of circumferential limiting grooves 3171 cooperate with the plurality of circumferential limiting bosses 303, to enhance stability of the oil guiding member 312 in a circumferential direction of the reducer input shaft 330.

In an embodiment, the second axial limiting boss 302 and the circumferential limiting boss 303 are integrally formed. This solution enhances structural strength of the second axial limiting boss 302 and the circumferential limiting boss 303. In addition, because there is no gap between the second axial limiting boss 302 and the circumferential limiting boss 303 in the first direction Y, the second axial limiting boss 302 and the first axial limiting boss 317 are more closely stacked along the first direction Y, which enhances axial limiting effect of the oil guiding member 312.

In an embodiment, a material of the sealing member 311 is different from a material of the oil guiding member 312. The material of the sealing member 311 is a metal material, and the material of the oil guiding member 312 is a plastic material. In this embodiment of this application, the sealing member 311 and the oil guiding member 312 have different functions. The sealing member 311 mainly performs sealing and axial limiting functions, and the material of the sealing member 311 needs to be rigid. The oil guiding member 312 mainly performs a function of guiding the flow direction of the cooling oil, and the material of the oil guiding member 312 needs to be easy to process. In this solution, the sealing member 311 and the oil guiding member 312 are made of different materials, so that the sealing member 311 and the oil guiding member 312 meet different use requirements. Specifically, using a metal material for the sealing member 311 improves rigidity of the sealing member 311, and ensures that the cooling oil does not leak out of the powertrain 10 from the fastening hole 313; and using a plastic material for the oil guiding member 312 reduces processing difficulty of the radial oil passage 3121 of the oil guiding member and the axial oil passage 3122 of the oil guiding member, and reduces manufacturing costs of the oil guiding member 312.

In an embodiment, a melting point of the oil guiding member 312 is less than 80°C. This solution ensures stability of the oil guiding member 312.

In an embodiment, the sealing member is sealed and fastened to an inner wall of the fastening hole by using a thread (not shown in the figure), so that the sealing member is sealed and fastened to the reducer end cover. In this embodiment of this application, the sealing member 311 can limit movement of the oil guiding member 312 towards the sealing member 311 along the first direction Y. In addition, because the sealing member 311 is in sealed connection with the fastening hole 313, the sealing member 311 can further seal the cooling oil, to prevent the cooling oil from leaking out of the powertrain 10 from the fastening hole 313. In this solution, a conventional complex structure with an end cover, a bolt, and a sealing ring is simplified into a structure with a sealing member 311 and an oil guiding member 312, so that assembly difficulty is reduced, and costs are reduced.

FIG. 9 is a diagram of a partial structure of a powertrain 10 according to an embodiment of this application. In an embodiment, an integrated housing 400 includes a motor housing, a reducer housing, and a controller housing. The motor housing is enclosed to form a motor accommodating cavity 420, the reducer housing is enclosed to form a reducer accommodating cavity 410, and the controller housing is enclosed to form a controller accommodating cavity 430. The motor 100 includes a motor shaft 140, a motor shaft bearing, a motor stator 120, a motor winding 130, a rotor sensor stator, and the like. The motor controller 200 includes a capacitor module 220, a power module 230, a circuit board 250, a copper bar assembly, and the like.

In an embodiment, a reducer accommodating housing, a motor accommodating housing, and a controller accommodating housing are of an integrated structure, or the integrated housing 400 is of an integrated structure. In an embodiment, the reducer accommodating housing, the motor accommodating housing, and the controller accommodating housing share an adjacent part of the integrated housings. In an embodiment, the reducer accommodating housing and the motor accommodating housing are of an integrated structure.

In this embodiment of this application, the integrated housing 400 is configured to accommodate the reducer 300, the motor 100, and the motor controller 200. Compared with the split-type powertrain 10, this implementation improves integration of the powertrain 10, increases space utilization of the powertrain 10, and reduces costs. In addition, this implementation can further enhance stability of an overall structure of the powertrain 10.

In this embodiment of this application, the controller accommodating cavity 430 communicates with neither the reducer accommodating cavity 410 nor the motor accommodating cavity 420, so that cooling oil in the motor accommodating cavity 420 and the reducer accommodating cavity 410 does not flow into the controller accommodating cavity 430 and therefore does not cause electrical interference to an electrical component in the motor controller 200, thereby ensuring that the motor controller 200 properly works.

In an embodiment, the integrated housing 400 further includes a direct current input interface mounting hole 440 and an alternating current output interface mounting hole 450; the motor 100 includes a motor stator 120, a motor shaft 140, and a motor winding 130; the controller accommodating cavity 430 and the motor accommodating cavity 420 are arranged along a second direction Z, where the second direction Z is perpendicular to the first direction Y; and the controller accommodating cavity 430 is configured to accommodate the motor controller 200. The reducer accommodating cavity 410 communicates with the motor accommodating cavity 420 and is arranged along the first direction Y. The reducer accommodating cavity 410 is configured to accommodate the reducer 300. The controller accommodating cavity 430 communicates with neither the reducer accommodating cavity 410 nor the motor accommodating cavity 420. The motor stator 120 is fixedly nested in the motor accommodating cavity 420, and a wiring terminal of the motor winding 130 is arranged relative to an output terminal of the motor shaft 140 along the first direction Y. The motor winding 130 is connected to the motor controller 200 by using an electrical connector 150, and the wiring terminal of the motor winding 130 may be the electrical connector 150.

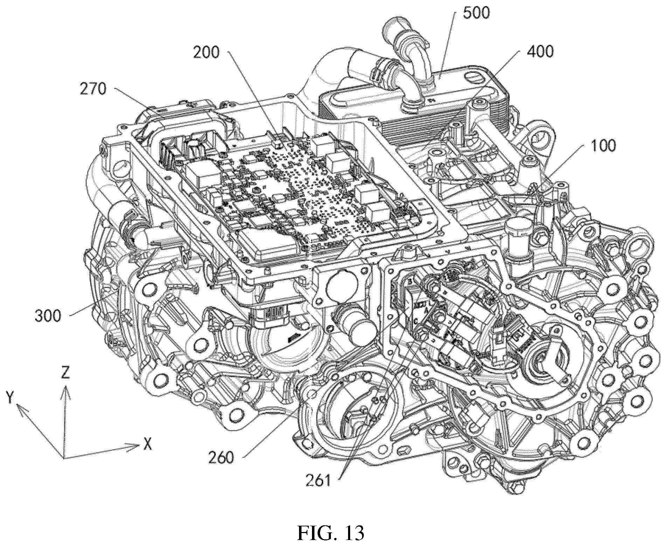

Still refer to FIG. 9 and FIG. 13. FIG. 13 is a diagram of a partial structure of a powertrain 10 according to an embodiment of this application. In an embodiment, both the direct current input interface mounting hole 440 and the alternating current output interface mounting hole 450 run through the integrated housing 400 along the first direction Y and are connected to the controller accommodating cavity 430.

In an embodiment, the motor controller 200 further includes a direct current input interface 270, and the direct current input interface mounting hole 440 is configured to fasten the direct current input interface 270 (as shown in FIG. 9 and FIG. 13). The direct current input interface 270 is configured to connect to a battery pack to receive a direct current.

In an embodiment, the motor controller 200 further includes an alternating current output interface 260, and the alternating current output interface mounting hole 450 is configured to fasten the alternating current output interface 260 (as shown in FIG. 9 and FIG. 13). The alternating current output interface 260 is configured to connect the copper bar assembly 240 and the three input copper bars 1011. In this embodiment of this application, the alternating current output interface 260 includes three wiring ports 261. The three wiring ports 261 are configured to electrically connect to wiring terminals of the motor winding 130 by using three input copper bars 1011, and the three input copper bars 1011 are spaced apart.

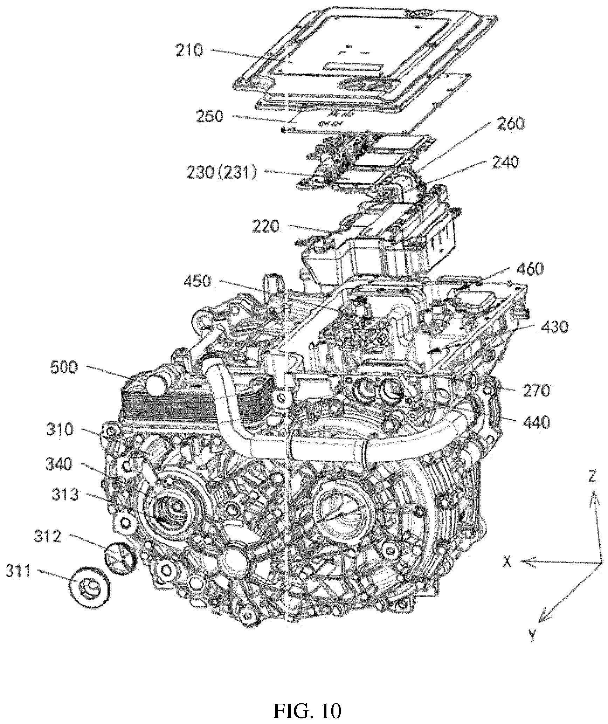

Refer to FIG. 9 and FIG. 10. FIG. 10 is a partial exploded view of a powertrain 10 according to an embodiment of this application. Along the first direction Y, a direct current input interface mounting hole 440 is arranged opposite to an alternating current output interface mounting hole 450 (as shown in FIG. 9), and a reducer end cover 310 is arranged opposite to an alternating current output interface mounting hole 450 (as shown in FIG. 9 and FIG. 10). The alternating current output interface mounting hole 450 and the wiring terminal of the motor winding 130 are arranged on one side along the first direction Y (as shown in FIG. 9), and the direct current input interface mounting hole 440 and the reducer end cover 310 are arranged on the other side along the first direction Y (as shown in FIG. 10).

In this embodiment of this application, the direct current input interface mounting hole 440 and the alternating current output interface mounting hole 450 are disposed oppositely along the first direction Y, to avoid electrical interference caused in a transmission process of a direct current and an alternating current, thereby improving security performance. In this embodiment of this application, the alternating current output interface mounting hole 450 and the wiring terminal of the motor winding 130 are adjacently disposed and located on a same side of the controller accommodating cavity 430, so that a transmission path of energy between the motor controller 200 and the motor 100 is relatively short, and impedance is lower. This reduces an energy loss on the transmission path, and improves energy transmission efficiency. In addition, a compact and regular layout between the motor controller 200 and the motor 100 reduces a volume of the powertrain 10, thereby optimizing a layout of the entire vehicle. In this embodiment of this application, a power transmission path between the motor controller 200, the motor 100, and the reducer 300 is approximately U-shaped, and the direct current input interface mounting hole 440 and the reducer end cover 310 are arranged on a same side along the first direction Y, to comply with an energy transmission path, thereby reducing an energy loss.

Still refer to FIG. 10. Along the second direction Z, the sealing member 311 and the oil guiding member 312 are located below the direct current input interface mounting hole 440. Along the first direction Y, a distance between the direct current input interface mounting hole 440 and at least one of the sealing member 311 or the oil guiding member 312 is less than a distance between the alternating current output interface mounting hole 450 and at least one of the sealing member 311 or the oil guiding member 312. In this embodiment of this application, in the second direction Z, the reducer 300 is located below the motor controller 200. The sealing member 311 and the oil guiding member 312 are located below the direct current input interface mounting hole 440. In addition, in the first direction Y, the sealing member 311 and the oil guiding member 312 are closer to the direct current input interface mounting hole 440 than the alternating current output interface mounting hole 450, to adapt to a U-shaped power transmission path between the motor 100, the motor controller 200, and the reducer 300. In this solution, components inside the powertrain 10 are properly arranged, which reduces a total volume of the powertrain 10 and improves power density.

Still refer to FIG. 10. In an embodiment, the motor controller 200 includes a capacitor module 220, a power module 230, and a copper bar assembly 240. The power module 230 and the capacitor module 220 are configured to receive a direct current. The power module 230 is configured to output an alternating current by using the copper bar assembly 240. The controller accommodating cavity 430 is configured to accommodate the capacitor module 220, the power module 230, and the copper bar assembly 240.

The capacitor module 220 is configured to transmit a direct current and adjust the direct current. In an embodiment, the voltage is smoothed so that the voltage is still smooth in the power module 230, and the capacitor module 220 may further reduce an inductance parameter, weaken a peak voltage, absorb a high pulse current, and prevent overcharging of the voltage and impact of a transient voltage on the motor controller 200. The power module 230 is a combination of a power electronic component that can implement a power conversion function. The power electronic component may be an insulated gate bipolar transistor (Insulated Gate Bipolar Transistor, IGBT), a silicon carbide power transistor, a silicon transistor, a metal-oxide semiconductor field-effect transistor (Metal-Oxide-Semiconductor Field-Effect Transistor, MOS tube), a diode, and the like. The copper bar assembly 240 is configured to transmit an alternating current output by the power module 230.

Still refer to FIG. 9 and FIG. 13. In an embodiment, along the first direction Y, a projection of the direct current input interface mounting hole 440 at least partially overlaps with a projection of the capacitor module 220. In this embodiment of this application, energy is sequentially transferred through the direct current input interface 270 in the direct current input interface mounting hole 440, the capacitor module 220, the power module 230, and the alternating current output interface 260 in the alternating current output interface mounting hole 450; and the direct current input interface mounting hole 440 and the alternating current output interface mounting hole 450 are disposed oppositely along the first direction Y, that is, a flow direction of a power flow between the direct current input interface 270 and the alternating current output interface 260 is the first direction Y. In this solution, the projection of the direct current input interface mounting hole 440 is set to at least partially overlap with the projection of the capacitor module 220, so that an energy transfer path between the direct current input interface 270 in the direct current input interface mounting hole 440 and the capacitor module 220 is relatively short, thereby reducing an energy loss inside the motor controller 200.

In an embodiment, a projection of the direct current input interface mounting hole 440 at least partially overlaps with a projection of the power module 230 (as shown in FIG. 9). This solution shortens an energy transfer path between the direct current input interface 270 in the direct current input interface mounting hole 440 and the power module 230, and reduces an energy loss inside the motor controller 200.

In an embodiment, a projection of the direct current input interface mounting hole 440 at least partially overlaps with projections of the capacitor module 220 and the power module 230 (as shown in FIG. 9). This solution shortens an energy transfer path between the direct current input interface 270, the capacitor module 220, and the power module 230 in the direct current input interface mounting hole 440, and reduces an energy loss inside the motor controller 200.

In an embodiment, along the first direction Y, a projection of the alternating current output interface mounting hole 450 at least partially overlaps with a projection of the capacitor module 220. In this embodiment of this application, energy is sequentially transferred through the direct current input interface 270 in the direct current input interface mounting hole 440, the capacitor module 220, the power module 230; and the alternating current output interface 260 in the alternating current output interface mounting hole 450, and the direct current input interface mounting hole 440 and the alternating current output interface mounting hole 450 are disposed oppositely along the first direction Y, that is, a flow direction of a power flow between the direct current input interface 270 and the alternating current output interface 260 is the first direction Y. In this solution, the projection of the alternating current output interface mounting hole 450 is set to at least partially overlap with the projection of the capacitor module 220, so that an energy transfer path between the alternating current output interface 260 and the capacitor module 220 is relatively short, thereby reducing an energy loss inside the motor controller 200.

In an embodiment, a projection of the alternating current output interface mounting hole 450 at least partially overlaps with a projection of the power module 230. This solution shortens an energy transfer path between the alternating current output interface 260 in the alternating current output interface mounting hole 450 and the power module 230, and reduces an energy loss inside the motor controller 200.

In an embodiment, a projection of the alternating current output interface mounting hole 450 at least partially overlaps with a projection of the capacitor module 220 and a projection of the power module 230. This solution shortens an energy transfer path between the alternating current output interface 260, the capacitor module 220, and the power module 230 in the alternating current output interface mounting hole 450, and reduces an energy loss inside the motor controller 200.

Still refer to FIG. 10. In an embodiment, the capacitor module 220 and the power module 230 are arranged in a stacked manner along the second direction Z, and the copper bar assembly 240 and the power module 230 are adjacently arranged along the third direction X, where the third direction X is perpendicular to the first direction Y and the second direction Z. The power module 230 includes a plurality of bridge arm modules 231 that are sequentially and adjacently arranged along the first direction Y. In this embodiment of this application, the capacitor module 220 and the power module 230 are disposed in a stacked manner along the second direction Z, and the copper bar assembly 240 and the power module 230 are disposed adjacently along the third direction X. Compared with that the capacitor module 220, the power module 230, and the copper bar assembly 240 are arranged in a tiled manner along the first direction Y, this solution reduces a size value of the motor controller 200 in the first direction Y, thereby reducing a size of the powertrain 10. In addition, the capacitor module 220 and the power module 230 may be connected along the second direction Z, so as to shorten a connection path and reduce power transmission energy consumption, so that a power flow between the capacitor module 220 and the power module 230 is smooth. Along the first direction Y, the plurality of bridge arm modules 231 are sequentially and adjacently arranged, and the plurality of bridge arm modules 231 are configured to form an inverter circuit to convert a direct current into an alternating current.

Still refer to FIG. 10. In an embodiment, the reducer end cover 310 and the controller accommodating cavity 430 are arranged along the first direction Y, and a projection of the sealing member 311 and projections of the capacitor module 220 and the power module 230 along the first direction Y do not overlap. In this embodiment of this application, if the projection of the sealing member 311 and the projections of the capacitor module 220 and the power module 230 along the first direction Y at least partially overlap, the sealing member 311 occupies adjacent areas of the capacitor module 220 and the power module 230 along the first direction Y, which causes interference to energy transfer of the motor controller 200. In this solution, positions of the sealing member 311, the capacitor module 220, and the power module 230 are properly arranged, to ensure that the reducer 300 and the motor controller 200 work properly and do not affect each other.

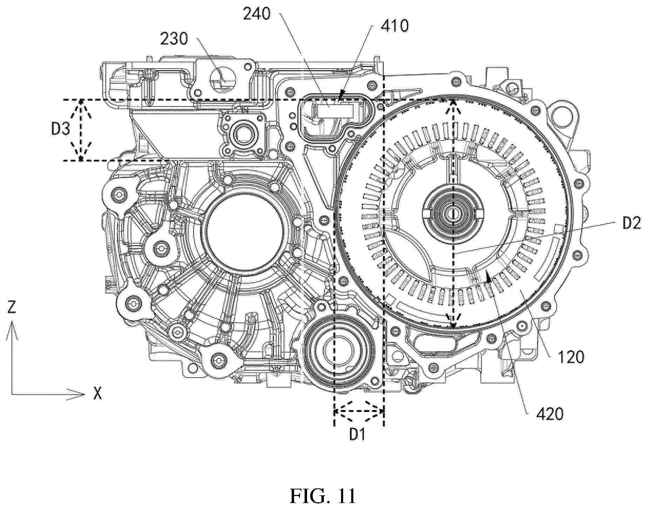

Refer to FIG. 9 and FIG. 11. FIG. 11 is a diagram of a partial structure of a powertrain 10 according to an embodiment of this application. In an embodiment, along a third direction X, a projection of a motor shaft 140 does not overlap with a projection of any one of a capacitor module 220, a power module 230, and a circuit board 250 (as shown in FIG. 9 and FIG. 11), projections of a controller accommodating cavity 430 and a motor accommodating cavity 420 along the third direction X at least partially overlap (as shown in FIG. 9 and FIG. 11), and a length of an overlapping part between the controller accommodating cavity 430 and the motor accommodating cavity 420 in the third direction X is less than an outer diameter of the motor stator 120 (as shown in FIG. 11). In this embodiment of this application, the projection of the motor shaft 140 and a projection of any one of the capacitor module 220, the power module 230, and the circuit board 250 in the third direction X do not overlap. This reduces a size value of the powertrain 10 in the third direction X. The controller accommodating cavity 430 and the motor accommodating cavity 420 are arranged along the second direction Z and partially overlap along the third direction X, so that a total size value of the motor controller 200 and the motor 100 in the second direction Z is reduced. A size value of the overlapping part between the controller accommodating cavity 430 and the motor accommodating cavity 420 in the third direction X is D1, an outer diameter of the motor stator 120 is D2, and the motor stator 120 is fixedly nested in the motor accommodating cavity 420. In this solution, it is set that D1 < D2, so that projections of the controller accommodating cavity 430 and the motor accommodating cavity 420 in the third direction X do not completely overlap. This provides space for disposing another component or apparatus under the controller accommodating cavity 430, thereby improving space utilization of the powertrain 10. In an embodiment, D1 < 0.5D2.

In an embodiment, the controller accommodating cavity 430 and the motor accommodating cavity 420 at least partially overlap along the second direction Z (as shown in FIG. 9 and FIG. 11), and a length D3 of an overlapping part between the controller accommodating cavity 430 and the motor accommodating cavity 420 in the second direction Z is less than an outer diameter D2 of the motor stator 120. In an embodiment, D3 < 0.5D2.

Still refer to FIG. 10. In an embodiment, along the first direction Y, projections of the sealing member 311 and the capacitor module 220 do not overlap. In this embodiment of this application, if the projections of the sealing member 311 and the capacitor module 220 along the first direction Y at least partially overlap, the sealing member 311 occupies an adjacent area of the capacitor module 220 along the first direction Y, which causes interference to energy transfer of the motor controller 200. In this solution, positions of the sealing member 311 and the capacitor module 220 are properly arranged, to ensure that the reducer 300 and the motor controller 200 work properly and do not affect each other. In an embodiment, projections of the sealing member 311 and the power module 230 do not overlap. In this solution, positions of the sealing member 311 and the power module 230 are properly arranged, to ensure that the reducer 300 and the motor controller 200 work properly and do not affect each other. In an embodiment, projections of the sealing member 311 and the copper bar assembly 240 do not overlap. In this solution, positions of the sealing member 311 and the copper bar assembly 240 are properly arranged, to ensure that the reducer 300 and the motor controller 200 work properly and do not affect each other.

Still refer to FIG. 10. In an embodiment, along the first direction Y, projections of the oil guiding member 312 and the capacitor module 220 do not overlap. In this embodiment of this application, if the projections of the oil guiding member 312 and the capacitor module 220 along the first direction Y at least partially overlap, the oil guiding member 312 occupies an adjacent area of the capacitor module 220 along the first direction Y, which causes interference to energy transfer of the motor controller 200. In this solution, positions of the oil guiding member 312 and the capacitor module 220 are properly arranged, to ensure that the reducer 300 and the motor controller 200 work properly and do not affect each other. In an embodiment, projections of the oil guiding member 312 and the power module 230 do not overlap. In this solution, positions of the oil guiding member 312 and the power module 230 are properly arranged, to ensure that the reducer 300 and the motor controller 200 work properly and do not affect each other. In an embodiment, projections of the oil guiding member 312 and the copper bar assembly 240 do not overlap. In this solution, positions of the oil guiding member 312 and the copper bar assembly 240 are properly arranged, to ensure that the reducer 300 and the motor controller 200 work properly and do not affect each other.

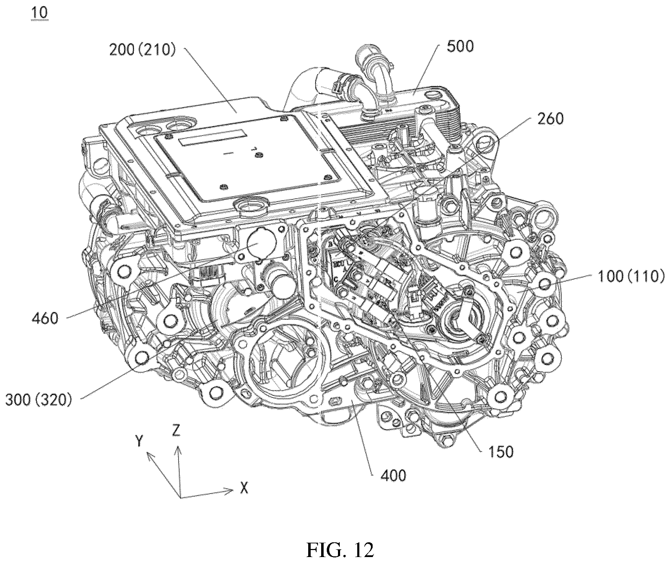

Still refer to FIG. 9 and FIG. 12. In an embodiment, the integrated housing 400 further includes a power interface mounting hole 460, where the power interface mounting hole 460 is configured to fasten a power interface, and the power interface is configured to connect onephase winding of the motor 100 and an external power supply. In this embodiment of this application, the motor controller 200 and the motor 100 in the powertrain 10 may form a voltage conversion circuit, and the voltage conversion circuit may receive power supply from an external power supply and charge the battery pack 30 through the power interface. In an embodiment, a voltage of an external power supply is greater than a charging voltage of the battery pack 30, and a voltage conversion circuit formed by the motor controller 200 and the motor 100 is used for voltage bucking. In an embodiment, a voltage of the external power supply is less than a charging voltage of the battery pack 30, and a voltage conversion circuit formed by the motor controller 200 and the motor 100 is used for voltage boosting.

In an embodiment, a positive electrode of the power interface is configured to electrically connect one phase of the copper bar assembly 240 and a positive electrode of an external power supply, and a negative electrode of the power interface is configured to electrically connect to a positive electrode of the battery pack 30 by using a direct current input interface 270. In an embodiment, a negative electrode of the power interface is configured to electrically connect one phase of the copper bar assembly 240 and a negative electrode of the external power supply, and a positive electrode of the power interface is configured to electrically connect to a positive electrode of the battery pack 30 by using the direct current input interface 270.

In this embodiment of this application, the power interface mounting hole 460 runs through the integrated housing 400 along the first direction Y and communicates with the controller accommodating cavity 430, and the power interface mounting hole 460 and the direct current input interface mounting hole 440 are arranged oppositely along the first direction Y. In an embodiment, the external power supply charges the battery pack 30 by using the power interface, the motor controller 200, and the direct current input interface 270, and the power interface mounting hole 460 and the direct current input interface mounting hole 440 are arranged oppositely along the first direction Y. This shortens a transmission path between the power interface mounting hole 460 and the direct current input interface mounting hole 440, thereby reducing an energy loss in a charging process. In an embodiment, the power interface mounting hole 460 and the direct current input interface mounting hole 440 are arranged oppositely along the first direction Y, and the power interface mounting hole 460 and the alternating current output interface mounting hole 450 are spaced apart along the third direction X, thereby facilitating electrical isolation.

Still refer to FIG. 9. In an embodiment, the alternating current output interface mounting hole 450 is located between the power interface mounting hole 460 and the motor shaft 140 along the second direction Z, the alternating current output interface mounting hole 450 is located between the power interface mounting hole 460 and the motor shaft 140 along the third direction X, where the third direction X is perpendicular to the first direction Y and the second direction Z. In this embodiment of this application, along the second direction Z and the third direction X, the alternating current output interface mounting hole 450 is closer to the motor 100 than the power interface mounting hole 460. Because there is an electrical connection relationship between the alternating current output interface and the wiring terminal of the motor winding 130, this solution shortens an energy transmission path, and a layout of the motor controller 200 and the motor 100 is more compact, thereby reducing a spatial volume of the powertrain 10 and improving power density.

Still refer to FIG. 10. In an embodiment, along the first direction Y, projections of the sealing member 311 and the oil guiding member 312 do not overlap with a projection of the power interface mounting hole 460. As a result, the power interface mounting hole 460 is spaced apart from the oil passage of the reducer 300, or the controller accommodating cavity where the power interface mounting hole 460 is located is spaced apart from the oil guiding member 312 and the sealing member 311, so that sufficient space is available around a power interface in the power interface mounting hole 460 for connecting to a power cable, thereby facilitating a charging operation. In this solution, positions of the sealing member 311, the oil guiding member 312, and the power interface mounting hole 460 are properly arranged, to ensure that the reducer 300 and the motor controller 200 work properly and do not affect each other.

Still refer to FIG. 10. In an embodiment, along the second direction Z and the third direction X, both the sealing member 311 and the oil guiding member 312 are spaced apart from the power interface mounting hole 460. In this embodiment of this application, no energy is transferred among the sealing member 311, the oil guiding member 312, and the power interface mounting hole 460; and along the second direction Z and the third direction X, both the sealing member 311 and the oil guiding member 312 are spaced apart from the power interface mounting hole 460, so that sufficient space is available around a power interface in the power interface mounting hole 460 for connecting to a power cable, thereby facilitating a charging operation.

Still refer to FIG. 9. In an embodiment, the reducer 300 includes a wheel driving end 320, the wheel driving end 320 is located below the direct current input interface mounting hole 440 and the alternating current output interface mounting hole 450 along the second direction Z, and an axial line of the wheel driving end 320 is parallel to the motor shaft 140 and is arranged perpendicular to the first direction Y.

In this embodiment of this application, the reducer 300 is configured to receive mechanical energy transmitted by the motor 100, and drive, by using the wheel driving end 320, the wheel to rotate. The controller accommodating cavity 430 and the motor accommodating cavity 420 are arranged along the second direction Z and partially overlap in the third direction X, so that mounting space is available under the controller accommodating cavity 430 along the second direction Z. Because the wheel driving end 320 of the reducer 300 needs to be connected to the wheel, this solution provides mounting space for connection between the reducer 300 and the wheel. The axial line of the wheel driving end 320 is parallel to the motor shaft 140, and the axial line of the wheel driving end 320 and an arrangement direction of the motor shaft 140 are perpendicular to the first direction Y, so that a layout of the motor 100 and the reducer 300 is compact and orderly.

In this embodiment of this application, a power flow direction of the motor controller 200 is opposite to an energy flow direction of the motor 100, and is approximately U-shaped; an energy flow direction of the motor 100 through the reducer 300 is also opposite to an energy flow direction of the wheel driving end 320, and is approximately U-shaped; an U-shaped opening in the U-shaped energy flow direction that is formed by the motor controller 200 and the motor 100 is opposite to a U-shaped opening in the U-shaped energy flow direction that is of the motor 100 and that passes through the wheel driving end 320 and the reducer 300; and the wheel driving end 320 is located below the motor controller 200, so that an entire energy flow of the powertrain 10 is smooth and an energy path is short, and the powertrain 10 is small in size, space-saving, more integrated, and miniaturized.

Refer to FIG. 4 and FIG. 12. FIG. 12 is a diagram of a structure of a powertrain 10 according to an embodiment of this application. In an embodiment, the controller accommodating cavity 430, the motor accommodating cavity 420, and the reducer accommodating cavity 410 each have an opening that communicates with outside, and the powertrain 10 further includes a reducer end cover 310 and a motor controller cover 210, the motor end cover 110, the reducer end cover 310, and the motor controller cover 210 are respectively configured to cover openings of the controller accommodating cavity 430, the motor accommodating cavity 420, and the reducer accommodating cavity 410. In this embodiment of this application, the motor end cover 110, the reducer end cover 310, and the motor controller cover 210 are disposed to protect the motor 100, the reducer 300, and the motor controller 200, and prevent impurities such as dust from entering the inside of the powertrain, thereby reducing interference from an external environment to the motor 100, the reducer 300, and the motor controller 200.

Still refer to FIG. 10 and FIG. 12. In an embodiment, the power module 230, the circuit board 250, and the motor controller cover 210 in the motor controller 200 are arranged in a stacked manner along the second direction Z (as shown in FIG. 10), and the motor end cover 110 and the reducer end cover 310 are arranged oppositely along the first direction Y (as shown in FIG. 10 and FIG. 12). A length of the motor controller cover 210 along the first direction Y is less than a total length between the motor end cover 110 and the reducer end cover 310 along the first direction Y. Along the first direction Y, the motor controller cover 210 is located between the motor end cover 110 and the reducer end cover 310 (as shown in FIG. 10 and FIG. 12). A length of the controller accommodating cavity 430 along the first direction Y is less than a distance between the motor end cover 110 and the reducer end cover 310 along the first direction Y.

In this embodiment of this application, the motor controller cover 210 covers an opening of the controller cavity along the second direction Z, and the motor end cover 110 and the reducer end cover 310 respectively cover an opening of the motor 100 and an opening of the reducer 300 along the first direction Y. The length of the motor controller cover 210 along the first direction Y is set to be less than the length between the motor end cover 110 and the reducer end cover 310 along the first direction Y, that is, the motor controller cover 210 is located between the motor end cover 110 and the reducer end cover 310 along the first direction Y. This reduces a total size value of the motor controller 200, the motor 100, and the reducer 300 in the first direction Y, thereby reducing a spatial volume occupied by the powertrain 10 in the electric vehicle. The length of the controller accommodating cavity 430 along the first direction Y is less than a distance between the motor end cover 110 and the reducer end cover 310 along the first direction Y, which can also reduce a volume of the powertrain 10.

It should be noted that, in this embodiment of this application, each of the projections of the direct current input interface mounting hole 440, the alternating current output interface mounting hole 450, the controller accommodating cavity 430, the motor accommodating cavity 420, and the power interface mounting hole 460 is a projection of an area enclosed by a hole wall of a hole, an inner wall of a cavity, or an inner wall of an opening.

## Claims

1. A split-type oil-passing powertrain (10), comprising a motor (100), a reducer (300), and a reducer end cover (310), wherein a motor shaft (140) of the motor (100) is fastened to a reducer input shaft (330) of the reducer (300), the reducer end cover (310), the reducer input shaft (330), and the motor shaft (140) are arranged along a first direction, and the first direction is parallel to an axial direction of the reducer input shaft (330); and
the reducer end cover (310) comprises a sealing member (311), an oil guiding member (312), and a fastening hole (313) that runs through the reducer end cover (310) along the first direction, the sealing member (311) and the oil guiding member (312) are located in the fastening hole (313), the sealing member (311), the oil guiding member (312), and the reducer input shaft (330) are sequentially arranged along the first direction, and the oil guiding member (312) is configured to transfer cooling oil to the reducer input shaft (330);
the sealing member (311) is sealed and fastened to an inner wall of the fastening hole (313) by using a thread, so that the sealing member (311) is sealed and fastened to the reducer end cover (310), wherein
a material of the sealing member (311) is different from a material of the oil guiding member (312), or hardness of the sealing member (311) is greater than hardness of the oil guiding member (312).

2. The powertrain (10) according to claim 1, wherein the oil guiding member (312) comprises a radial oil passage (3121) of the oil guiding member (312) and an axial oil passage (3122) of the oil guiding member (312) that communicate with each other, an extension direction of the radial oil passage (3121) of the oil guiding member (312) is parallel to a radial direction of the reducer input shaft (330), an extension direction of the axial oil passage (3122) of the oil guiding member (312) is parallel to the axial direction of the reducer input shaft (330), and the axial oil passage (3122) of the oil guiding member (312) and the reducer input shaft (330) are spaced apart along the first direction.

3. The powertrain (10) according to claim 2, wherein the reducer input shaft (330) comprises a reducer shaft cavity (331), the motor shaft (140) comprises a motor shaft cavity (141), the reducer (300) further comprises an oil pipe (340), the reducer shaft cavity (331) is configured to accommodate the oil pipe (340), and the oil pipe (340) is configured to enable the oil guiding member (312) and the motor shaft cavity (141) to communicate with each other;
along the first direction, the reducer shaft cavity (331) runs through the reducer input shaft (330), and the motor shaft cavity (141) runs through the motor shaft (140);
the oil pipe (340), the oil guiding member (312), and the sealing member (311) are spaced apart along the first direction; and
there is a gap between the axial oil passage (3122) of the oil guiding member (312) and the oil pipe (340) along the first direction, an inner diameter of the oil pipe (340) is greater than an inner diameter of the axial oil passage (3122) of the oil guiding member (312), and a projection of the axial oil passage (3122) of the oil guiding member (312) along the first direction falls within a projection of the oil pipe (340) along the first direction.

4. The powertrain (10) according to claim 3, wherein the reducer (300) further comprises a sleeve structure (301), and the sleeve structure (301) is sleeved on the oil pipe (340);
the sleeve structure (301), the oil guiding member (312), and the sealing member (311) are arranged along the first direction, and the sleeve structure (301) is fastened to the oil guiding member (312); and
the projection of the axial oil passage (3122) of the oil guiding member (312) along the first direction falls within a projection of the sleeve structure (301) along the first direction, and along the radial direction of the reducer input shaft (330), there is a gap between an inner surface that is of the sleeve structure (301) and that faces the oil pipe (340) and an outer surface that is of the oil pip (340)e and that faces the sleeve structure (301).

5. The powertrain (10) according to claim 3, wherein the reducer shaft cavity (331) is further configured to accommodate a part of the motor shaft (140), and there is a gap between an outer circumferential surface of the motor shaft (140) and an inner wall of the reducer shaft cavity (331) along the radial direction of the reducer input shaft (330); and
the motor shaft cavity (141) is configured to accommodate a part of the oil pipe (340), there is an oil gap between the oil pipe (340) and an inner wall of the motor shaft cavity (141) along a radial direction of the motor (100), an oil pipe sealing boss (341) is disposed on an outer circumferential surface of a part that is of the oil pipe (340) and that is not located in the motor shaft cavity (141), the oil pipe sealing boss (341) is in sealed connection with the inner wall of the reducer shaft cavity (331) along the radial direction of the reducer input shaft (330), and the oil pipe sealing boss (341) and the motor shaft (140) are spaced apart along the first direction.

6. The powertrain (10) according to claim 2, wherein the reducer end cover (310) comprises a reducer end cover oil passage (314), the reducer end cover oil passage (314) is configured to communicate with a heat exchanger (500), the reducer end cover oil passage (314) communicates with the radial oil passage (3121) of the oil guiding member (312) in the oil guiding member (312), and projections of the reducer end cover oil passage (314) and the radial oil passage (3121) of the oil guiding member (312) along the radial direction of the reducer input shaft (330) at least partially overlap.

7. The powertrain (10) according to claim 6, wherein the reducer (300) further comprises a reducer bearing (350), the reducer end cover (310) comprises a reducer bearing chamber (315), the reducer bearing chamber (315) is recessed along the first direction from the reducer end cover (310) to a direction away from the reducer input shaft (330), and the reducer bearing (350) is sleeved on the reducer input shaft (330) and located in the reducer bearing chamber (315); and
the reducer end cover (310) further comprises a reducer bearing lubricating oil hole (316), wherein the reducer bearing lubricating oil hole (316) is configured to enable the reducer end cover oil passage (314) and the reducer bearing chamber (315) to communicate with each other, the reducer end cover oil passage (314), the reducer bearing lubricating oil hole (316), and the reducer bearing chamber (315) are arranged along the first direction, and the reducer bearing lubricating oil hole (316) and the radial oil passage (3121) of the oil guiding member (312) are spaced apart along the radial direction of the reducer input shaft (330).

8. The powertrain (10) according to claim 7, wherein projections of the reducer bearing lubricating oil hole (316) and the reducer bearing chamber (315) along the first direction at least partially overlap;
along the radial direction of the reducer input shaft (330), a distance between the reducer bearing lubricating oil hole (316) and an axial line of the reducer input shaft (330) is less than an outer diameter of the reducer bearing chamber (315); and
a length of the reducer bearing lubricating oil hole (316) along the first direction and a length of the lubricating oil hole (316) along the radial direction of the reducer input shaft (330) are both less than a length of the reducer end cover oil passage (314) along the first direction.

9. The powertrain (10) according to claim 6, wherein the powertrain (10) further comprises the heat exchanger (500), the heat exchanger (500) and the reducer end cover (310) are arranged along a second direction, and the second direction is perpendicular to the first direction; and the reducer end cover (310), the heat exchanger (500), and the motor (100) are arranged along the first direction; and
the reducer end cover oil passage (314) comprises a radial oil passage (3141) of the reducer end cover (310) and an axial oil passage (3142) of the reducer end cover (310), wherein the radial oil passage (3141) of the reducer end cover (310) communicates with the axial oil passage (3142) of the reducer end cover (310), the radial oil passage (3141) of the reducer end cover (310) extends along the radial direction of the reducer input shaft (330), and the axial oil passage (3142) of the reducer end cover (310) extends along the axial direction of the reducer input shaft (330); and the radial oil passage (3141) of the reducer end cover communicates with the heat exchanger (500) through the axial oil passage (3142) of the reducer end cover (310), the radial oil passage (3141) of the reducer end cover (310) is configured to communicate with the radial oil passage (3121) of the oil guiding member (312), and projections of the radial oil passage (3141) of the reducer end cover (310) and the radial oil passage (3121) of the oil guiding member (312) along the radial direction of the reducer input shaft (330) at least partially overlap.

10. The powertrain according to claim 1, wherein the reducer end cover (310) further comprises a first axial limiting boss (317), wherein the first axial limiting boss (317) protrudes, along a radial direction of the reducer input shaft (330), from an inner surface of the fastening hole (313) towards the oil guiding member (312); and the reducer further comprises a second axial limiting boss (302), wherein the second axial limiting boss (302) protrudes, along the radial direction of the reducer input shaft (330), from an outer circumferential surface of the oil guiding member(312) towards a hole wall of the fastening hole (313);
along the first direction, the second axial limiting boss (302) is located between the sealing member (311) and the first axial limiting boss (317), and the first axial limiting boss (317) and the second axial limiting boss (302) are stacked along the first direction, so that the oil guiding member(312) is limited between the sealing member (311) and the first axial limiting boss (317) along the first direction; and
the first axial limiting boss (317) comprises a circumferential limiting groove (3171), and the circumferential limiting groove (3171) is recessed, along the radial direction of the reducer input shaft (330), from an outer circumferential surface of the first axial limiting boss (317) towards the inner surface of the fastening hole (313); the reducer (300) further comprises a circumferential limiting boss (303), and the circumferential limiting boss (303) protrudes, along the radial direction of the reducer input shaft (330), from an outer surface of the oil guiding member (312) towards the hole wall of the fastening hole (313); and the circumferential limiting boss (303) is located on a side that is of the second axial limiting boss (302) and that is close to the reducer input shaft (330) along the first direction, and the circumferential limiting boss(303) is located in the circumferential limiting groove (3171).

11. The powertrain (10) according to claim 1, wherein the powertrain (10) comprises an integrated housing (400), the integrated housing (400) further comprises a reducer accommodating cavity (410), a controller accommodating cavity (430), a motor accommodating cavity (420), a direct current input interface mounting hole (440), and an alternating current output interface mounting hole (450), the motor (100) comprises a motor stator (120), the motor shaft (140), and a motor winding (130), the controller accommodating cavity (430) and the motor accommodating cavity (420) are arranged along a second direction, and the second direction is perpendicular to the first direction, and the controller accommodating cavity (430) is configured to accommodate the motor controller (200), the reducer accommodating cavity (410) communicates with the motor accommodating cavity (420) and arranged along the first direction, the reducer accommodating cavity (410) is configured to accommodate the reducer (300), and the controller accommodating cavity (430) communicates with neither the reducer accommodating cavity (410) nor the motor accommodating cavity (420), wherein
the motor stator (120) is fixedly nested in the motor accommodating cavity (420), and a wiring terminal of the motor winding (130) and an output terminal of the motor shaft (140) are arranged oppositely along the first direction;
the direct current input interface mounting hole (440) and the alternating current output interface mounting hole (450) respectively run through the integrated housing (400) along the first direction and communicate with the controller accommodating cavity (430);
the direct current input interface mounting hole (440) and the alternating current output interface mounting hole (450) are arranged oppositely along the first direction, and the reducer end cover (310) and the alternating current output interface mounting hole (450) are arranged oppositely; and the alternating current output interface mounting hole (450) and the wiring terminal of the motor winding (130) are arranged on one side along the first direction, and the direct current input interface mounting hole (440) and the reducer end cover (310) are arranged on the other side along the first direction;
along the second direction, the sealing member (311) and the oil guiding member (312) are located below the direct current input interface mounting hole (440); and
along the first direction, a distance between the direct current input interface mounting hole (440) and at least one of the sealing member (311) or the oil guiding member (312) is less than a distance between the alternating current output interface mounting hole (450) and at least one of the sealing member (311) or the oil guiding member (312).

12. The powertrain (10) according to claim 11, wherein the motor controller (200) comprises a capacitor module (220), a power module (230), and a copper bar assembly (240), the power module (230) and the capacitor module (220) are configured to receive a direct current, the power module (230) is configured to output an alternating current by using the copper bar assembly (240), and the controller accommodating cavity (430) is configured to accommodate the capacitor module (220), the power module (230), and the copper bar assembly (240), wherein
along the first direction, projections of the direct current input interface mounting hole (440) and the alternating current output interface mounting hole (450) at least partially overlap with projections of the capacitor module (220) and the power module (230);
the capacitor module (220) and the power module (230) are arranged in a stacked manner along the second direction, and the copper bar assembly (240) and the power module (230) are adjacently arranged along a third direction, wherein the third direction is perpendicular to the first direction and the second direction; and the power module (230) comprises a plurality of bridge arm modules (231) that are sequentially and adjacently arranged along the first direction;
the reducer end cover (310) and the controller accommodating cavity (430) are arranged along the first direction, and a projection of the sealing member (311) and projections of the capacitor module (220) and the power module (230) along the first direction do not overlap;
along the third direction, a projection of the motor shaft (140) does not overlap with projections of the capacitor module (220) and the power module (230), projections of the controller accommodating cavity (430) and the motor accommodating cavity (420) along the third direction at least partially overlap, and a length of an overlapping part between the controller accommodating cavity (430) and the motor accommodating cavity (420) in the third direction is less than an outer diameter of the motor stator (120); and
along the first direction, projections of the sealing member (311) and the oil guiding member (312) does not overlap with a projection of any one of the capacitor module (220), the power module (230), and the copper bar assembly (240).

13. The powertrain (10) according to claim 11, wherein the integrated housing (400) further comprises a power interface mounting hole (460), the power interface mounting hole (460) is configured to fasten a power interface, the power interface is configured to electrically connect onephase winding of the motor (100) and an external power supply, the power interface mounting hole (460) runs through the integrated housing (400) along the first direction and communicates with the controller accommodating cavity (430), and the power interface mounting hole (460) and the direct current input interface mounting hole (440) are arranged oppositely along the first direction; and the alternating current output interface mounting holes (450) and the power interface mounting holes (460) are spaced apart along a third direction, and the third direction is perpendicular to the first direction and the second direction.

14. An electric vehicle (1), comprising a vehicle body (20) and the powertrain (10) according to any one of claims 1 to 13, wherein the powertrain (10) is fastened to the vehicle body (20), and the powertrain (10) is configured to drive a wheel (40) to rotate.

## Patentansprüche

1. Geteilter Öldurchlassantriebsstrang (10), umfassend einen Motor (100), ein Untersetzungsgetriebe (300) und eine Endabdeckung (310) des Untersetzungsgetriebes, wobei eine Motorwelle (140) des Motors (100) an einer Eingangswelle (330) des Untersetzungsgetriebe des Untersetzungsgetriebes (300) befestigt ist, die Endabdeckung (310) des Untersetzungsgetriebes, die Eingangswelle (330) des Untersetzungsgetriebes und die Motorwelle (140) entlang einer ersten Richtung angeordnet sind, und die erste Richtung parallel zu einer axialen Richtung der Eingangswelle (330) des Untersetzungsgetriebes verläuft; und
die Endabdeckung (310) des Untersetzungsgetriebes ein Dichtungselement (311), ein Ölführungselement (312) und ein Befestigungsloch (313) umfasst, das entlang der ersten Richtung durch die Endabdeckung (310) des Untersetzungsgetriebes verläuft, sich das Dichtungselement (311) und das Ölführungselement (312) in dem Befestigungsloch (313) befinden, das Dichtungselement (311), das Ölführungselement (312) und die Eingangswelle (330) des Untersetzungsgetriebes nacheinander entlang der ersten Richtung angeordnet sind, und das Ölführungselement (312) dazu konfiguriert ist, Kühlöl an die Eingangswelle (330) des Untersetzungsgetriebes zu leiten;
das Dichtungselement (311) an einer Innenwand des Befestigungslochs (313) unter Verwendung eines Gewindes abgedichtet und befestigt ist, sodass das Dichtungselement (311) an der Endabdeckung (310) des Untersetzungsgetriebes abgedichtet und befestigt ist, wobei
sich ein Material des Dichtungselements (311) von einem Material des Ölführungselements (312) unterscheidet, oder die Härte des Dichtungselements (311) größer als die Härte des Ölführungselements (312) ist.

2. Antriebsstrang (10) nach Anspruch 1, wobei das Ölführungselement (312) einen radialen Ölkanal (3121) des Ölführungselements (312) und einen axialen Ölkanal (3122) des Ölführungselements (312) umfasst, die miteinander kommunizieren, eine Erstreckungsrichtung des radialen Ölkanals (3121) des Ölführungselements (312) parallel zu einer radialen Richtung der Eingangswelle (330) des Untersetzungsgetriebe verläuft, eine Erstreckungsrichtung des axialen Ölkanals (3122) des Ölführungselements (312) parallel zu der axialen Richtung der Eingangswelle (330) des Untersetzungsgetriebe verläuft, und der axiale Ölkanal (3122) des Ölführungselements (312) und die Eingangswelle (330) des Untersetzungsgetriebes entlang der ersten Richtung voneinander beabstandet sind.

3. Antriebsstrang (10) nach Anspruch 2, wobei die Eingangswelle (330) des Untersetzungsgetriebes einen Hohlraum (331) der Welle des Untersetzungsgetriebes umfasst, die Motorwelle (140) einen Motorwellenhohlraum (141) umfasst, das Untersetzungsgetriebe (300) ferner eine Ölleitung (340) umfasst, der Hohlraum (331) der Welle des Untersetzungsgetriebes dazu konfiguriert ist, die Ölleitung (340) aufzunehmen, und die Ölleitung (340) dazu konfiguriert ist, das Ölführungselement (312) und den Motorwellenhohlraum (141) in die Lage zu versetzen, miteinander zu kommunizieren;
der Hohlraum (331) der Welle des Untersetzungsgetriebes entlang der ersten Richtung durch die Eingangswelle (330) des Untersetzungsgetriebes verläuft und der Motorwellenhohlraum (141) durch die Motorwelle (140) verläuft;
die Ölleitung (340), das Ölführungselement (312) und das Dichtungselement (311) entlang der ersten Richtung voneinander beabstandet sind; und
ein Spalt zwischen dem axialen Ölkanal (3122) des Ölführungselements (312) und der Ölleitung (340) entlang der ersten Richtung besteht, ein Innendurchmesser der Ölleitung (340) größer als ein Innendurchmesser des axialen Ölkanals (3122) des Ölführungselements (312) ist, und ein Vorsprung des axialen Ölkanals (3122) des Ölführungselements (312) entlang der ersten Richtung innerhalb eines Vorsprungs der Ölleitung (340) entlang der ersten Richtung fällt.

4. Antriebsstrang (10) nach Anspruch 3, wobei das Untersetzungsgetriebe (300) ferner eine Hülsenstruktur (301) umfasst, und die Hülsenstruktur (301) auf die Ölleitung (340) aufgesteckt ist;
die Hülsenstruktur (301), das Ölführungselement (312) und das Dichtungselement (311) entlang der ersten Richtung angeordnet sind, und die Hülsenstruktur (301) an dem Ölführungselement (312) befestigt ist; und
der Vorsprung des axialen Ölkanals (3122) des Ölführungselements (312) entlang der ersten Richtung innerhalb eines Vorsprungs der Hülsenstruktur (301) entlang der ersten Richtung fällt, und entlang der radialen Richtung der Eingangswelle (330) des Untersetzungsgetriebes ein Spalt zwischen einer Innenfläche, die von der Hülsenstruktur (301) stammt und die der Ölleitung (340) zugewandt ist, und einer Außenfläche, die von der Ölleitung (340) stammt und die der Hülsenstruktur (301) zugewandt ist, besteht.

5. Antriebsstrang (10) nach Anspruch 3, wobei der Hohlraum (331) der Welle des Untersetzungsgetriebes ferner dazu konfiguriert ist, einen Teil der Motorwelle (140) aufzunehmen, und ein Spalt zwischen einer Außenumfangsfläche der Motorwelle (140) und einer Innenwand des Hohlraums (331) der Welle des Untersetzungsgetriebes entlang der radialen Richtung der Eingangswelle (330) des Untersetzungsgetriebes besteht; und
der Motorwellenhohlraum (141) dazu konfiguriert ist, einen Teil der Ölleitung (340) aufzunehmen, ein Ölspalt zwischen der Ölleitung (340) und einer Innenwand des Motorwellenhohlraums (141) entlang einer radialen Richtung des Motors (100) besteht, ein Dichtungsvorsprung (341) der Ölleitung an einer Außenumfangsfläche eines Teils, der von der Ölleitung (340) stammt und der sich nicht in dem Motorwellenhohlraum (141) befindet, angeordnet ist, der Dichtungsvorsprung (341) der Ölleitung in abgedichteter Verbindung mit der Innenwand des Hohlraums (331) der Welle des Untersetzungsgetriebes entlang der radialen Richtung der Eingangswelle (330) des Untersetzungsgetriebes steht, und der Dichtungsvorsprung (341) der Ölleitung und die Motorwelle (140) entlang der ersten Richtung voneinander beabstandet sind.

6. Antriebsstrang (10) nach Anspruch 2, wobei die Endabdeckung (310) des Untersetzungsgetriebes einen Ölkanal (314) der Endabdeckung des Untersetzungsgetriebes umfasst, der Ölkanal (314) der Endabdeckung des Untersetzungsgetriebes dazu konfiguriert ist, mit einem Wärmetauscher (500) zu kommunizieren, der Ölkanal (314) der Endabdeckung des Untersetzungsgetriebes mit dem radialen Ölkanal (3121) des Ölführungselements (312) in dem Ölführungselement (312) kommuniziert und sich Vorsprünge des Ölkanals (314) der Endabdeckung des Untersetzungsgetriebes und des radialen Ölkanals (3121) des Ölführungselements (312) entlang der radialen Richtung der Eingangswelle (330) des Untersetzungsgetriebes zumindest teilweise überlappen.

7. Antriebsstrang (10) nach Anspruch 6, wobei das Untersetzungsgetriebe (300) ferner ein Untersetzungsgetriebelager (350) umfasst, die Endabdeckung (310) des Untersetzungsgetriebes eine Lagerkammer (315) des Untersetzungsgetriebes umfasst, die Lagerkammer (315) des Untersetzungsgetriebes entlang der ersten Richtung von der Endabdeckung (310) des Untersetzungsgetriebes in eine Richtung weg von der Eingangswelle (330) des Untersetzungsgetriebes ausgespart ist, und das Untersetzungsgetriebelager (350) auf die Eingangswelle (330) des Untersetzungsgetriebes aufgesteckt ist und sich in der Lagerkammer (315) des Untersetzungsgetriebes befindet; und
die Endabdeckung (310) des Untersetzungsgetriebes ferner ein Schmierölloch (316) des Untersetzungsgetriebelagers umfasst, wobei das Schmierölloch (316) des Untersetzungsgetriebelagers dazu konfiguriert ist, den Ölkanal (314) der Endabdeckung des Untersetzungsgetriebes und die Lagerkammer (315) des Untersetzungsgetriebes in die Lage zu versetzen, miteinander zu kommunizieren, wobei der Ölkanal (314) der Endabdeckung des Untersetzungsgetriebes, das Schmierölloch (316) des Untersetzungsgetriebelagers und die Lagerkammer (315) des Untersetzungsgetriebes entlang der ersten Richtung angeordnet sind, und das Schmierölloch (316) des Untersetzungsgetriebelagers und der radiale Ölkanal (3121) des Ölführungselements (312) entlang der radialen Richtung der Eingangswelle (330) des Untersetzungsgetriebes beabstandet sind.

8. Antriebsstrang (10) nach Anspruch 7, wobei sich Vorsprünge des Schmieröllochs (316) des Untersetzungsgetriebelagers und der Lagerkammer (315) des Untersetzungsgetriebes entlang der ersten Richtung zumindest teilweise überlappen;
ein Abstand zwischen dem Schmierölloch (316) des Untersetzungsgetriebelagers und einer axialen Linie der Eingangswelle (330) des Untersetzungsgetriebes entlang der radialen Richtung der Eingangswelle (330) des Untersetzungsgetriebes kleiner als ein Außendurchmesser der Lagerkammer (315) des Untersetzungsgetriebes ist; und
eine Länge des Schmieröllochs (316) des Untersetzungsgetriebelagers entlang der ersten Richtung und eine Länge des Schmieröllochs (316) entlang der radialen Richtung der Eingangswelle (330) des Untersetzungsgetriebes beide kleiner als eine Länge des Ölkanals (314) der Endabdeckung des Untersetzungsgetriebes entlang der ersten Richtung sind.

9. Antriebsstrang (10) nach Anspruch 6, wobei der Antriebsstrang (10) ferner den Wärmetauscher (500) umfasst, der Wärmetauscher (500) und die Endabdeckung (310) des Untersetzungsgetriebes entlang einer zweiten Richtung angeordnet sind, und die zweite Richtung senkrecht zu der ersten Richtung verläuft; und die Endabdeckung (310) des Untersetzungsgetriebes, der Wärmetauscher (500) und der Motor (100) entlang der ersten Richtung angeordnet sind; und
der Ölkanal (314) der Endabdeckung des Untersetzungsgetriebes einen radialen Ölkanal (3141) der Endabdeckung (310) des Untersetzungsgetriebes und einen axialen Ölkanal (3142) der Endabdeckung (310) des Untersetzungsgetriebes umfasst, wobei der radiale Ölkanal (3141) der Endabdeckung (310) des Untersetzungsgetriebes mit dem axialen Ölkanal (3142) der Endabdeckung (310) des Untersetzungsgetriebes kommuniziert, sich der radiale Ölkanal (3141) der Endabdeckung (310) des Untersetzungsgetriebes entlang der radialen Richtung der Eingangswelle (330) des Untersetzungsgetriebes erstreckt, und sich der axiale Ölkanal (3142) der Endabdeckung (310) des Untersetzungsgetriebes entlang der axialen Richtung der Eingangswelle (330) des Untersetzungsgetriebes erstreckt; und der radiale Ölkanal (3141) der Endabdeckung des Untersetzungsgetriebes über den axialen Ölkanal (3142) der Endabdeckung (310) des Untersetzungsgetriebes mit dem Wärmetauscher (500) kommuniziert, der radiale Ölkanal (3141) der Endabdeckung (310) des Untersetzungsgetriebes dazu konfiguriert ist, mit dem radialen Ölkanal (3121) des Ölführungselements (312) zu kommunizieren, und sich Vorsprünge des radialen Ölkanals (3141) der Endabdeckung (310) des Untersetzungsgetriebes und des radialen Ölkanals (3121) des Ölführungselements (312) entlang der radialen Richtung der Eingangswelle (330) des Untersetzungsgetriebes zumindest teilweise überlappen.

10. Antriebsstrang nach Anspruch 1, wobei die Endabdeckung (310) des Untersetzungsgetriebes ferner einen ersten axialen Begrenzungsvorsprung (317) umfasst, wobei der erste axiale Begrenzungsvorsprung (317) entlang einer radialen Richtung der Eingangswelle (330) des Untersetzungsgetriebes von einer Innenfläche des Befestigungslochs (313) in Richtung des Ölführungselements (312) vorsteht; und das Untersetzungsgetriebe ferner einen zweiten axialen Begrenzungsvorsprung (302) umfasst, wobei der zweite axiale Begrenzungsvorsprung (302) entlang der radialen Richtung der Eingangswelle (330) des Untersetzungsgetriebes von einer Außenumfangsfläche des Ölführungselements (312) in Richtung einer Lochwand des Befestigungslochs (313) vorsteht;
sich der zweite axiale Begrenzungsvorsprung (302) entlang der ersten Richtung zwischen dem Dichtungselement (311) und dem ersten axialen Begrenzungsvorsprung (317) befindet, und der erste axiale Begrenzungsvorsprung (317) und der zweite axiale Begrenzungsvorsprung (302) entlang der ersten Richtung gestapelt sind, sodass das Ölführungselement (312) zwischen dem Dichtungselement (311) und dem ersten axialen Begrenzungsvorsprung (317) entlang der ersten Richtung begrenzt ist; und
der erste axiale Begrenzungsvorsprung (317) eine umlaufende Begrenzungsnut (3171) umfasst, und die umlaufende Begrenzungsnut (3171) entlang der radialen Richtung der Eingangswelle (330) des Untersetzungsgetriebes von einer Außenumfangsfläche des ersten axialen Begrenzungsvorsprungs (317) in Richtung der Innenfläche des Befestigungslochs (313) ausgespart ist; das Untersetzungsgetriebe (300) ferner einen umlaufenden Begrenzungsvorsprung (303) umfasst, und der umlaufende Begrenzungsvorsprung (303) entlang der radialen Richtung der Eingangswelle (330) des Untersetzungsgetriebes von einer Außenfläche des Ölführungselements (312) in Richtung der Lochwand des Befestigungslochs (313) vorsteht; und sich der umlaufende Begrenzungsvorsprung (303) auf einer Seite, die von dem zweiten axialen Begrenzungsvorsprung (302) stammt und die nahe der Eingangswelle (330) des Untersetzungsgetriebes entlang der ersten Richtung liegt, befindet, und sich der umlaufende Begrenzungsvorsprung (303) in der umlaufenden Begrenzungsnut (3171) befindet.

11. Antriebsstrang (10) nach Anspruch 1, wobei der Antriebsstrang (10) ein integriertes Gehäuse (400) umfasst, das integrierte Gehäuse (400) ferner einen Hohlraum (410) zur Aufnahme des Untersetzungsgetriebes, einen Hohlraum (430) zur Aufnahme der Steuerung, einen Hohlraum (420) zur Aufnahme des Motors, ein Montageloch (440) für die Gleichstrom-Eingangsschnittstelle und ein Montageloch (450) für die Wechselstrom-Ausgangsschnittstelle umfasst, der Motor (100) einen Motorstator (120), die Motorwelle (140) und eine Motorwicklung (130) umfasst, der Hohlraum (430) zur Aufnahme der Steuerung und der Hohlraum (420) zur Aufnahme des Motors entlang einer zweiten Richtung angeordnet sind, und die zweite Richtung senkrecht zu der ersten Richtung verläuft, und der Hohlraum (430) zur Aufnahme der Steuerung dazu konfiguriert ist, die Motorsteuerung (200) aufzunehmen, der Hohlraum (410) zur Aufnahme des Untersetzungsgetriebes mit dem Hohlraum (420) zur Aufnahme des Motors kommuniziert und entlang der ersten Richtung angeordnet ist, der Hohlraum (410) zur Aufnahme des Untersetzungsgetriebes dazu konfiguriert ist, das Untersetzungsgetriebe (300) aufzunehmen, und der Hohlraum (430) zur Aufnahme der Steuerung weder mit dem Hohlraum (410) zur Aufnahme des Untersetzungsgetriebes noch mit dem Hohlraum (420) zur Aufnahme des Motors kommuniziert, wobei
der Motorstator (120) fest in dem Hohlraum (420) zur Aufnahme des Motors eingebettet ist, und ein Verdrahtungsanschluss der Motorwicklung (130) und ein Ausgangsanschluss der Motorwelle (140) entlang der ersten Richtung entgegengesetzt angeordnet sind;
das Montageloch (440) für die Gleichstrom-Eingangsschnittstelle und das Montageloch (450) für die Wechselstrom-Ausgangsschnittstelle jeweils entlang der ersten Richtung durch das integrierte Gehäuse (400) verlaufen und mit dem den Hohlraum (430) zur Aufnahme der Steuerung kommunizieren;
das Montageloch (440) für die Gleichstrom-Eingangsschnittstelle und das Montageloch (450) für die Wechselstrom-Ausgangsschnittstelle entlang der ersten Richtung entgegengesetzt angeordnet sind, und die Endabdeckung (310) des Untersetzungsgetriebes und das Montageloch (450) für die Wechselstrom-Ausgangsschnittstelle entgegengesetzt angeordnet sind; und das Montageloch (450) für die Wechselstrom-Ausgangsschnittstelle und der Verdrahtungsanschluss der Motorwicklung (130) auf einer Seite entlang der ersten Richtung angeordnet sind, und das Montageloch (440) für die Gleichstrom-Eingangsschnittstelle und die Endabdeckung (310) des Untersetzungsgetriebes entlang der ersten Richtung auf der anderen Seite angeordnet sind;
sich das Dichtungselement (311) und das Ölführungselement (312) entlang der zweiten Richtung unterhalb des Montagelochs (440) für die Gleichstrom-Eingangsschnittstelle befinden; und
ein Abstand zwischen dem Montageloch (440) für die Gleichstrom-Eingangsschnittstelle und mindestens einem von dem Dichtungselement (311) oder dem Ölführungselement (312) entlang der ersten Richtung kleiner als ein Abstand zwischen dem Montageloch (450) für die Wechselstrom-Ausgangsschnittstelle und mindestens einem von dem Dichtungselement (311) oder dem Ölführungselement (312) ist.

12. Antriebsstrang (10) nach Anspruch 11, wobei die Motorsteuerung (200) ein Kondensatormodul (220), ein Leistungsmodul (230) und eine Kupferschienenbaugruppe (240) umfasst, wobei das Leistungsmodul (230) und das Kondensatormodul (220) dazu konfiguriert sind, einen Gleichstrom zu empfangen, das Leistungsmodul (230) dazu konfiguriert ist, unter Verwendung der Kupferschienenbaugruppe (240) Wechselstrom auszugeben, und der Hohlraum (430) zur Aufnahme der Steuerung dazu konfiguriert ist, das Kondensatormodul (220), das Leistungsmodul (230) und die Kupferschienenbaugruppe (240) aufzunehmen, wobei
sich Vorsprünge des Montagelochs (440) für die Gleichstrom-Eingangsschnittstelle und des Montagelochs (450) für die Wechselstrom-Ausgangsschnittstelle entlang der ersten Richtung zumindest teilweise mit Vorsprüngen des Kondensatormoduls (220) und des Leistungsmoduls (230) überlappen;
das Kondensatormodul (220) und das Leistungsmodul (230) entlang der zweiten Richtung gestapelt angeordnet sind, und die Kupferschienenbaugruppe (240) und das Leistungsmodul (230) entlang einer dritten Richtung benachbart angeordnet sind, wobei die dritte Richtung senkrecht zu der ersten Richtung und zu der zweiten Richtung verläuft; und das Leistungsmodul (230) eine Vielzahl von Brückenarmmodulen (231) umfasst, die entlang der ersten Richtung nacheinander und benachbart angeordnet sind;
die Endabdeckung (310) des Untersetzungsgetriebes und der Hohlraum (430) zur Aufnahme der Steuerung entlang der ersten Richtung angeordnet sind, und sich ein Vorsprung des Dichtungselements (311) und Vorsprünge des Kondensatormoduls (220) und des Leistungsmoduls (230) entlang der ersten Richtung nicht überlappen;
sich ein Vorsprung der Motorwelle (140) entlang der dritten Richtung nicht mit Vorsprüngen des Kondensatormoduls (220) und des Leistungsmoduls (230) überlappt, sich Vorsprünge des Hohlraums (430) zur Aufnahme der Steuerung und des Hohlraums (420) zur Aufnahme des Motors entlang der dritten Richtung zumindest teilweise überlappen, und eine Länge eines überlappenden Teils zwischen dem Hohlraum (430) zur Aufnahme der Steuerung und dem Hohlraum (420) zur Aufnahme des Motors in der dritten Richtung kleiner als ein Außendurchmesser des Motorstators (120) ist; und
sich Vorsprünge des Dichtungselements (311) und des Ölführungselements (312) entlang der ersten Richtung nicht mit einem Vorsprung eines beliebigen des Kondensatormoduls (220), des Leistungsmoduls (230) und der Kupferschienenbaugruppe (240) überlappen.

13. Antriebsstrang (10) nach Anspruch 11, wobei das integrierte Gehäuse (400) ferner ein Montageloch (460) für eine Leistungsschnittstelle umfasst, das Montageloch (460) für die Leistungsschnittstelle dazu konfiguriert ist, eine Leistungsschnittstelle zu befestigen, die Leistungsschnittstelle dazu konfiguriert ist, eine Phasenwicklung des Motors (100) elektrisch mit einer externen Stromversorgung zu verbinden, das Montageloch (460) für die Leistungsschnittstelle entlang der ersten Richtung durch das integrierte Gehäuse (400) verläuft und mit dem Hohlraum (430) zur Aufnahme der Steuerung kommuniziert, und das Montageloch (460) für die Leistungsschnittstelle und das Montageloch (440) für die Gleichstrom-Eingangsschnittstelle entlang der ersten Richtung entgegengesetzt angeordnet sind; und die Montagelöcher (450) für die Wechselstrom-Ausgangsschnittstelle und die Montagelöcher (460) für die Leistungsschnittstelle entlang einer dritten Richtung beabstandet sind, und die dritte Richtung senkrecht zu der ersten Richtung und zu der zweiten Richtung verläuft.

14. Elektrofahrzeug (1), umfassend einen Fahrzeugkörper (20) und einen Antriebsstrang (10) nach einem der Ansprüche 1 bis 13, wobei der Antriebsstrang (10) an dem Fahrzeugkörper (20) befestigt ist, und der Antriebsstrang (10) dazu konfiguriert ist, ein Rad (40) dazu anzutreiben, sich zu drehen.

## Revendications

1. Groupe motopropulseur à passage d'huile de type divisé (10), comprenant un moteur (100), un réducteur (300), et un couvercle d'extrémité de réducteur (310), dans lequel un arbre de moteur (140) du moteur (100) est fixé à un arbre d'entrée de réducteur (330) du réducteur (300), le couvercle d'extrémité de réducteur (310), l'arbre d'entrée de réducteur (330), et l'arbre de moteur (140) sont agencés dans une première direction, et la première direction est parallèle à une direction axiale de l'arbre d'entrée de réducteur (330) ; et
le couvercle d'extrémité de réducteur (310) comprend un élément d'étanchéité (311), un élément de guidage d'huile (312), et un trou de fixation (313) qui traverse le couvercle d'extrémité de réducteur (310) dans la première direction, l'élément d'étanchéité (311) et l'élément de guidage d'huile (312) sont situés dans le trou de fixation (313), l'élément d'étanchéité (311), l'élément de guidage d'huile (312) et l'arbre d'entrée de réducteur (330) sont agencés séquentiellement dans la première direction, et l'élément de guidage d'huile (312) est configuré pour transférer l'huile de refroidissement à l'arbre d'entrée de réducteur (330) ;
l'élément d'étanchéité (311) est scellé et fixé à une paroi intérieure du trou de fixation (313) en utilisant un filetage, de sorte que l'élément d'étanchéité (311) est scellé et fixé au couvercle d'extrémité de réducteur (310), dans lequel
un matériau de l'élément d'étanchéité (311) est différent d'un matériau de l'élément de guidage d'huile (312), ou la dureté de l'élément d'étanchéité (311) est supérieure à la dureté de l'élément de guidage d'huile (312).

2. Groupe motopropulseur (10) selon la revendication 1, dans lequel l'élément de guidage d'huile (312) comprend un passage d'huile radial (3121) de l'élément de guidage d'huile (312) et un passage d'huile axial (3122) de l'élément de guidage d'huile (312) qui communiquent entre eux, une direction de prolongement du passage d'huile radial (3121) de l'élément de guidage d'huile (312) est parallèle à une direction radiale de l'arbre d'entrée de réducteur (330), une direction de prolongement du passage d'huile axial (3122) de l'élément de guidage d'huile (312) est parallèle à la direction axiale de l'arbre d'entrée de réducteur (330), et le passage d'huile axial (3122) de l'élément de guidage d'huile (312) et l'arbre d'entrée de réducteur (330) sont espacés dans la première direction.

3. Groupe motopropulseur (10) selon la revendication 2, dans lequel l'arbre d'entrée de réducteur (330) comprend une cavité d'arbre de réducteur (331), l'arbre de moteur (140) comprend une cavité d'arbre de moteur (141), le réducteur (300) comprend également un tuyau d'huile (340), la cavité d'arbre de réducteur (331) est configurée pour loger le tuyau d'huile (340), et le tuyau d'huile (340) est configuré pour permettre à l'élément de guidage d'huile (312) et à la cavité d'arbre de moteur (141) de communiquer entre eux ;
dans la première direction, la cavité d'arbre de réducteur (331) traverse l'arbre d'entrée de réducteur (330), et la cavité d'arbre de moteur (141) traverse l'arbre de moteur (140) ;
le tuyau d'huile (340), l'élément de guidage d'huile (312), et l'élément d'étanchéité (311) sont espacés dans la première direction ; et
il existe un espace entre le passage d'huile axial (3122) de l'élément de guidage d'huile (312) et le tuyau d'huile (340) dans la première direction, un diamètre intérieur du tuyau d'huile (340) est supérieur à un diamètre intérieur du passage d'huile axial (3122) de l'élément de guidage d'huile (312), et une projection du passage d'huile axial (3122) de l'élément de guidage d'huile (312) dans la première direction tombe à l'intérieur d'une projection du tuyau d'huile (340) dans la première direction.

4. Groupe motopropulseur (10) selon la revendication 3, dans lequel le réducteur (300) comprend également une structure de manchon (301), et la structure de manchon (301) est emboîtée sur le tuyau d'huile (340) ;
la structure de manchon (301), l'élément de guidage d'huile (312), et l'élément d'étanchéité (311) sont agencés dans la première direction, et la structure de manchon (301) est fixée à l'élément de guidage d'huile (312) ; et
la projection du passage d'huile axial (3122) de l'élément de guidage d'huile (312) dans la première direction tombe dans une projection de la structure de manchon (301) dans la première direction, et dans la direction radiale de l'arbre d'entrée de réducteur (330), il existe un espace entre une surface intérieure qui est de la structure de manchon (301) et qui fait face au tuyau d'huile (340) et une surface extérieure qui est du tuyau d'huile (340) et qui fait face à la structure de manchon (301).

5. Groupe motopropulseur (10) selon la revendication 3, dans lequel la cavité d'arbre de réducteur (331) est également configurée pour loger une partie de l'arbre de moteur (140), et il existe un espace entre une surface circonférentielle extérieure de l'arbre de moteur (140) et une paroi intérieure de la cavité d'arbre de réducteur (331) dans la direction radiale de l'arbre d'entrée de réducteur (330) ; et
la cavité d'arbre de moteur (141) est configurée pour loger une partie du tuyau d'huile (340), il existe un espace d'huile entre le tuyau d'huile (340) et une paroi intérieure de la cavité d'arbre de moteur (141) dans une direction radiale du moteur (100), un bossage d'étanchéité de tuyau d'huile (341) est disposé sur une surface circonférentielle extérieure d'une partie qui est du tuyau d'huile (340) qui n'est pas située dans la cavité d'arbre de moteur (141), le bossage d'étanchéité de tuyau d'huile (341) est en connexion étanche avec la paroi intérieure de la cavité d'arbre de réducteur (331) dans la direction radiale de l'arbre d'entrée de réducteur (330), et le bossage d'étanchéité de tuyau d'huile (341) et l'arbre de moteur (140) sont espacés dans la première direction.

6. Groupe motopropulseur (10) selon la revendication 2, dans lequel le couvercle d'extrémité de réducteur (310) comprend un passage d'huile de couvercle d'extrémité de réducteur (314), le passage d'huile de couvercle d'extrémité de réducteur (314) est configuré pour communiquer avec un échangeur de chaleur (500), le passage d'huile de couvercle d'extrémité de réducteur (314) communique avec le passage d'huile radial (3121) de l'élément de guidage d'huile (312) dans l'élément de guidage d'huile (312), et les projections du passage d'huile de couvercle d'extrémité de réducteur (314) et du passage d'huile radial (3121) de l'élément de guidage d'huile (312) dans la direction radiale de l'arbre d'entrée de réducteur (330) se chevauchent au moins partiellement.

7. Groupe motopropulseur (10) selon la revendication 6, dans lequel le réducteur (300) comprend également un palier de réducteur (350), le couvercle d'extrémité de réducteur (310) comprend une chambre de palier de réducteur (315), la chambre de palier de réducteur (315) est encastrée dans la première direction à partir du couvercle d'extrémité de réducteur (310) vers une direction s'éloignant de l'arbre d'entrée de réducteur (330), et le palier de réducteur (350) est emboîté sur l'arbre d'entrée de réducteur (330) et situé dans la chambre de palier de réducteur (315) ; et
le couvercle d'extrémité de réducteur (310) comprend également un trou d'huile de lubrification de palier de réducteur (316), dans lequel le trou d'huile de lubrification de palier de réducteur (316) est configuré pour permettre au passage d'huile de couvercle d'extrémité de réducteur (314) et à la chambre de palier de réducteur (315) de communiquer entre eux, le passage d'huile de couvercle d'extrémité de réducteur (314), le trou d'huile de lubrification de palier de réducteur (316), et la chambre de palier de réducteur (315) sont agencés dans la première direction, et le trou d'huile de lubrification de palier de réducteur (316) et le passage d'huile radial (3121) de l'élément de guidage d'huile (312) sont espacés dans la direction radiale de l'arbre d'entrée de réducteur (330).

8. Groupe motopropulseur (10) selon la revendication 7, dans lequel les projections du trou d'huile de lubrification de palier de réducteur (316) et de la chambre de palier de réducteur (315) dans la première direction se chevauchent au moins partiellement ;
dans la direction radiale de l'arbre d'entrée de réducteur (330), une distance entre le trou d'huile de lubrification de palier de réducteur (316) et une ligne axiale de l'arbre d'entrée de réducteur (330) est inférieure à un diamètre extérieur de la chambre de palier de réducteur (315) ; et
une longueur du trou d'huile de lubrification de palier de réducteur (316) dans la première direction et une longueur du trou d'huile de lubrification (316) dans la direction radiale de l'arbre d'entrée de réducteur (330) sont toutes deux inférieures à une longueur du passage d'huile de couvercle d'extrémité de réducteur (314) dans la première direction.

9. Groupe motopropulseur (10) selon la revendication 6, dans lequel le groupe motopropulseur (10) comprend également l'échangeur de chaleur (500), l'échangeur de chaleur (500) et le couvercle d'extrémité de réducteur (310) sont agencés dans une deuxième direction, et la deuxième direction est perpendiculaire à la première direction ; et le couvercle d'extrémité de réducteur (310), l'échangeur de chaleur (500), et le moteur (100) sont agencés dans la première direction ; et le passage d'huile de couvercle d'extrémité de réducteur (314) comprend un passage d'huile radial (3141) du couvercle d'extrémité de réducteur (310) et un passage d'huile axial (3142) du couvercle d'extrémité de réducteur (310), dans lequel le passage d'huile radial (3141) du couvercle d'extrémité de réducteur (310) communique avec le passage d'huile axial (3142) du couvercle d'extrémité de réducteur (310), le passage d'huile radial (3141) du couvercle d'extrémité de réducteur (310) se prolonge dans la direction radiale de l'arbre d'entrée de réducteur (330), et le passage d'huile axial (3142) du couvercle d'extrémité de réducteur (310) se prolonge dans la direction axiale de l'arbre d'entrée de réducteur (330) ; et le passage d'huile radial (3141) du couvercle d'extrémité de réducteur communique avec l'échangeur de chaleur (500) par l'intermédiaire du passage d'huile axial (3142) du couvercle d'extrémité de réducteur (310), le passage d'huile radial (3141) du couvercle d'extrémité de réducteur (310) est configuré pour communiquer avec le passage d'huile radial (3121) de l'élément de guidage d'huile (312), et les projections du passage d'huile radial (3141) du couvercle d'extrémité de réducteur (310) et du passage d'huile radial (3121) de l'élément de guidage d'huile (312) dans la direction radiale de l'arbre d'entrée de réducteur (330) se chevauchent au moins partiellement.

10. Groupe motopropulseur selon la revendication 1, dans lequel le couvercle d'extrémité de réducteur (310) comprend également un premier bossage de limitation axiale (317), dans lequel le premier bossage de limitation axiale (317) fait saillie, dans une direction radiale de l'arbre d'entrée de réducteur (330), à partir d'une surface intérieure du trou de fixation (313) vers l'élément de guidage d'huile (312) ; et le réducteur comprend également un second bossage de limitation axiale (302), dans lequel le second bossage de limitation axiale (302) fait saillie, dans la direction radiale de l'arbre d'entrée de réducteur (330), à partir d'une surface circonférentielle extérieure de l'élément de guidage d'huile (312) vers une paroi de trou du trou de fixation (313) ;
dans la première direction, le second bossage de limitation axiale (302) est situé entre l'élément d'étanchéité (311) et le premier bossage de limitation axiale (317), et le premier bossage de limitation axiale (317) et le second bossage de limitation axiale (302) sont superposés dans la première direction, de sorte que l'élément de guidage d'huile (312) est limité entre l'élément d'étanchéité (311) et le premier bossage de limitation axiale (317) dans la première direction ; et
le premier bossage de limitation axiale (317) comprend une rainure de limitation circonférentielle (3171), et la rainure de limitation circonférentielle (3171) est encastrée, dans la direction radiale de l'arbre d'entrée de réducteur (330), à partir d'une surface circonférentielle extérieure du premier bossage de limitation axiale (317) vers la surface intérieure du trou de fixation (313) ; le réducteur (300) comprend également un bossage de limitation circonférentielle (303), et le bossage de limitation circonférentielle (303) fait saillie, dans la direction radiale de l'arbre d'entrée de réducteur (330), à partir d'une surface extérieure de l'élément de guidage d'huile (312) vers la paroi de trou du trou de fixation (313) ; et le bossage de limitation circonférentielle (303) est situé sur un côté qui est du second bossage de limitation axiale (302) et qui est proche de l'arbre d'entrée de réducteur (330) dans la première direction, et le bossage de limitation circonférentielle (303) est situé dans la rainure de limitation circonférentielle (3171).

11. Groupe motopropulseur (10) selon la revendication 1, dans lequel le groupe motopropulseur (10) comprend un logement intégré (400), le logement intégré (400) comprend également une cavité logeant le réducteur (410), une cavité logeant le dispositif de commande (430), une cavité logeant le moteur (420), un trou de montage d'interface d'entrée de courant continu (440), et un trou de montage d'interface de sortie de courant alternatif (450), le moteur (100) comprend un stator de moteur (120), un arbre de moteur (140), et un enroulement de moteur (130), la cavité logeant le dispositif de commande (430) et la cavité logeant le moteur (420) sont agencées dans une deuxième direction, et la deuxième direction est perpendiculaire à la première direction, et la cavité logeant le dispositif de commande (430) est configurée pour loger le dispositif de commande de moteur (200), la cavité logeant le réducteur (410) communique avec la cavité logeant le moteur (420) et est agencée dans la première direction, la cavité logeant le réducteur (410) est configurée pour loger le réducteur (300), et la cavité logeant le dispositif de commande (430) ne communique ni avec la cavité logeant le réducteur (410) ni avec la cavité logeant le moteur (420), dans lequel
le stator de moteur (120) est imbriqué en fixation dans la cavité logeant le moteur (420), et une borne de câblage de l'enroulement de moteur (130) et une borne de sortie de l'arbre de moteur (140) sont agencées de manière opposée dans la première direction ;
le trou de montage d'interface d'entrée de courant continu (440) et le trou de montage d'interface de sortie de courant alternatif (450) traversent respectivement le logement intégré (400) dans la première direction et communiquent avec la cavité logeant le dispositif de commande (430) ;
le trou de montage d'interface d'entrée de courant continu (440) et le trou de montage d'interface de sortie de courant alternatif (450) sont agencés de manière opposée dans la première direction, et le couvercle d'extrémité de réducteur (310) et le trou de montage d'interface de sortie de courant alternatif (450) sont agencés de manière opposée ; et le trou de montage d'interface de sortie de courant alternatif (450) et la borne de câblage de l'enroulement de moteur (130) sont agencés d'un côté dans la première direction, et le trou de montage d'interface d'entrée de courant continu (440) et le couvercle d'extrémité de réducteur (310) sont agencés de l'autre côté dans la première direction ;
dans la deuxième direction, l'élément d'étanchéité (311) et l'élément de guidage d'huile (312) sont situés sous le trou de montage d'interface d'entrée de courant continu (440) ; et
dans la première direction, une distance entre le trou de montage d'interface d'entrée de courant continu (440) et au moins l'un de l'élément d'étanchéité (311) ou de l'élément de guidage d'huile (312) est inférieure à une distance entre le trou de montage d'interface de sortie de courant alternatif (450) et au moins l'un de l'élément d'étanchéité (311) ou de l'élément de guidage d'huile (312).

12. Groupe motopropulseur (10) selon la revendication 11, dans lequel le dispositif de commande de moteur (200) comprend un module de condensateur (220), un module de puissance (230), et un ensemble de barres de cuivre (240), le module de puissance (230) et le module de condensateur (220) sont configurés pour recevoir un courant continu, le module de puissance (230) est configuré pour délivrer en sortie un courant alternatif en utilisant l'ensemble de barres de cuivre (240), et la cavité logeant le dispositif de commande (430) est configurée pour loger le module de condensateur (220), le module de puissance (230), et l'ensemble de barres de cuivre (240), dans lequel
dans la première direction, les projections du trou de montage d'interface d'entrée de courant continu (440) et du trou de montage d'interface de sortie de courant alternatif (450) chevauchent au moins partiellement les projections du module de condensateur (220) et du module de puissance (230) ;
le module de condensateur (220) et le module de puissance (230) sont agencés de manière empilée dans la deuxième direction, et l'ensemble de barres de cuivre (240) et le module de puissance (230) sont agencés de manière adjacente dans une troisième direction, dans lequel la troisième direction est perpendiculaire à la première direction et à la deuxième direction ; et le module de puissance (230) comprend une pluralité de modules de bras de pont (231) qui sont agencés séquentiellement et de manière adjacente dans la première direction ;
le couvercle d'extrémité de réducteur (310) et la cavité logeant le dispositif de commande (430) sont agencés dans la première direction, et une projection de l'élément d'étanchéité (311) et les projections du module de condensateur (220) et du module de puissance (230) dans la première direction ne se chevauchent pas ;
dans la troisième direction, une projection de l'arbre de moteur (140) ne chevauche pas les projections du module de condensateur (220) et du module de puissance (230), les projections de la cavité logeant le dispositif de commande (430) et de la cavité logeant le moteur (420) dans la troisième direction se chevauchent au moins partiellement, et une longueur d'une partie chevauchante entre la cavité logeant le dispositif de commande (430) et la cavité logeant le moteur (420) dans la troisième direction est inférieure à un diamètre extérieur du stator de moteur (120) ; et
dans la première direction, les projections de l'élément d'étanchéité (311) et de l'élément de guidage d'huile (312) ne chevauchent pas une projection de l'un quelconque du module de condensateur (220), du module de puissance (230), et de l'ensemble de barres de cuivre (240).

13. Groupe motopropulseur (10) selon la revendication 11, dans lequel le logement intégré (400) comprend également un trou de montage d'interface de puissance (460), le trou de montage d'interface de puissance (460) est configuré pour fixer une interface de puissance, l'interface de puissance est configurée pour connecter électriquement l'enroulement monophasé de moteur (100) et une alimentation en puissance externe, le trou de montage d'interface de puissance (460) traverse le logement intégré (400) dans la première direction et communique avec la cavité logeant le dispositif de commande (430), et le trou de montage d'interface de puissance (460) et le trou de montage d'interface d'entrée de courant continu (440) sont agencés de manière opposée dans la première direction ; et les trous de montage d'interface de sortie de courant alternatif (450) et les trous de montage d'interface de puissance (460) sont espacés dans une troisième direction, et la troisième direction est perpendiculaire à la première direction et à la deuxième direction.

14. Véhicule électrique (1), comprenant une carrosserie de véhicule (20) et le groupe motopropulseur (10) selon l'une quelconque des revendications 1 à 13, dans lequel le groupe motopropulseur (10) est fixé à la carrosserie de véhicule (20), et le groupe motopropulseur (10) est configuré pour entraîner une roue (40) en rotation.
